(19) Europäisches Patentamt / European Patent Office / Office européen des brevets

(11) **EP 1 581 743 B1**

(12) **EUROPEAN PATENT SPECIFICATION**

(45) Date of publication and mention
of the grant of the patent:
**17.01.2007 Bulletin 2007/03**

(51) Int Cl.:
*F03D 5/02* (2006.01)     *F03D 5/06* (2006.01)
*F03D 11/04* (2006.01)

(21) Application number: **03772638.7**

(22) Date of filing: **08.10.2003**

(86) International application number:
**PCT/IT2003/000605**

(87) International publication number:
**WO 2004/044418 (27.05.2004 Gazette 2004/22)**

(54) **APPARATUS, PLANT AND METHOD FOR THE CONVERSION OF WIND OR WATER FLOW ENERGY INTO ELECTRICAL ENERGY**

WIND ODER WASSERENERGIEUMFORMER

APPAREIL, INSTALLATION ET PROCEDE POUR LA CONVERSION D'ENERGIE EOLIENNE OU HYDRAULIQUE EN ENERGIE ELECTRIQUE

(84) Designated Contracting States:
**AT BE BG CH CY CZ DE DK EE ES FI FR GB GR HU IE IT LI LU MC NL PT RO SE SI SK TR**

(30) Priority: **13.11.2002 IT RM20020569**

(43) Date of publication of application:
**05.10.2005 Bulletin 2005/40**

(73) Proprietor: **Miodushevsky, Pavel**
**72100 Brindisi (IT)**

(72) Inventor: **Miodushevsky, Pavel**
**72100 Brindisi (IT)**

(74) Representative: **Papa, Elisabetta et al**
**Società Italiana Brevetti S.p.A**
**Piazza di Pietra, 39**
**00186 Roma (IT)**

(56) References cited:
**EP-A- 0 841 480          DE-A- 2 437 003**
**US-A- 4 572 962**

**Description**

The present invention refers to an apparatus, a plant and a related method for the conversion of energy from a renewable source, and in particular the energy of a wind or water flow, into electrical energy.

For the exploitation of the so-called renewable energy sources, various water and wind turbines are known. These turbines have a minutely designed blading, allowing them to be set in motion by an incident air or water flow. The mechanical energy thus transmitted from the flow to the turbine is then transformed into electrical energy in suitable plants well-known to a person skilled in the art.

However, notwithstanding the remarkable investments of the last years in the field of renewable energies, said known-art turbines and the associated energy conversion plants still entail remarkable drawbacks.

First of all, the turbines at issue generally have bladings with a contour optimized for a certain specific application, and in particular for a certain entity and direction of the speed of the incident air or water flow. This makes these turbines very non-versatile. In particular, wind turbines have a fixed operative height with respect to the ground, not allowing optimizing the exploitation of wind flow energy under different meteorological conditions. Moreover, typically said turbines are quite inefficient, if not completely useless, for low wind of water flow speeds.

Additionally, known-art turbines require a fine dynamic balancing, decisively affecting the maximum speed of rotation of the turbine and its service life.

Moreover, said energy conversion plants are quite complex and costly to build, even for medium-low power levels. In particular, in the case of wind turbines the electromechanical components associated to the actual turbine are to be installed on the same column structure supporting the latter, with the related vibration problems that such a construction entails. Furthermore, concerning water flow energy conversion plants, those always entail a very drastic impact on the environment, requiring the building of artificial basins and often the relocation of settlements, additionally entailing alteration of the fish fauna and deforestation.

EP 0 841 480 discloses a driving apparatus which extracts its energy from the wind. In a first embodiment, the apparatus comprises kites each fixed to two lateral pulling cables having an endless design. The pulling cables are connected to a drive shaft. Other embodiments of EP 0 841 480 have a similar construction, with the kites fixedly connected to a pulling cable.

The technical problem underlying the present invention is to provide an apparatus, an associated plant and a method for the conversion of energy from a renewable source, and in particular wind or water flow energy, into electrical energy alternative to the systems of the known art and overcoming the drawbacks hereto mentioned with reference to the latter.

Such a problem is solved by an apparatus according to claim 1.

According to the same inventive concept, the present invention further refers to a plant according to claim 23.

The invention also provides a method according to claim 25.

It will be understood that the term 'users' should be construed here in its broadest meaning, encompassing any kind of unit being inputted the mechanical energy provided by the wing device of the invention in its driving stroke, for the direct exploitation of this mechanical energy as well as for its transformation or conversion. Hence, the apparatus of the invention can be used in the context of a plant for the production of electrical energy according to the invention, as well as to provide mechanical energy directly exploitable as such.

The present invention provides some relevant advantages. One of the main advantages is that the invention increases the efficiency of the conversion of said alternative energies into electrical energy, as it will be illustrated in detail later on. Moreover, the invention decreases the costs and the complexity of the required plant and markedly abates the related environmental impact.

According to a preferred embodiment, the invention provides an option of adjusting the length and the arrangement of the operative paths of the wing elements. Hence, in this embodiment, the invention expands the speed range of the wind and water useful in the production of electrical energy, allowing to implement extremely versatile plants.

Other advantages, features and the operation steps of the present invention will be made apparent in the following detailed description of some embodiments thereof, given by way of example and not for limitative purposes. Reference will be made to the figures of the annexed drawings, wherein:

Figure 1 is a front view of a first embodiment of the apparatus for the conversion of wind flow energy into mechanical energy exploitable by users according to the present invention, in operation;
Figures 2A and 2B respectively are a cross-sectional view and a plan view of a wing device of the apparatus of Figure 1;
Figure 3 is a schematic front view of a wing device of the apparatus of Figure 1 shown in a two-fold configuration;
Figure 4 is a schematic front view of an unfolding device of the apparatus of Figure 1;
Figure 5 is a schematic plan view of some components of a plant for the conversion of wind flow energy into electrical energy comprising the apparatus of Figure 1;
Figure 6 is a front view of a second embodiment of the apparatus according to the present invention, in operation;

Figure 7 is a front view of the third embodiment of the apparatus according to the present invention, in operation;

Figure 8 is a partially sectional front view of a wing device of the apparatus of Figure 7 and of related means for varying the tilt of the wing elements of said device;

Figure 8A is a sectional view of a detail of the system of Figure 8, taken along line A-A of the latter;

Figure 9 is a partially sectional side view of a catamaran-type watercraft of a fourth embodiment of the apparatus according to the present invention;

Figure 10 is a top plan view of a portion of the apparatus of Figure 9;

Figure 11 is a top plan view of a wing device of the apparatus of Figure 9; and

Figure 12 is a schematic view of a portion of the apparatus of Figure 9 in operation for controlling the tilt of the wing elements of the device of Figure 11.

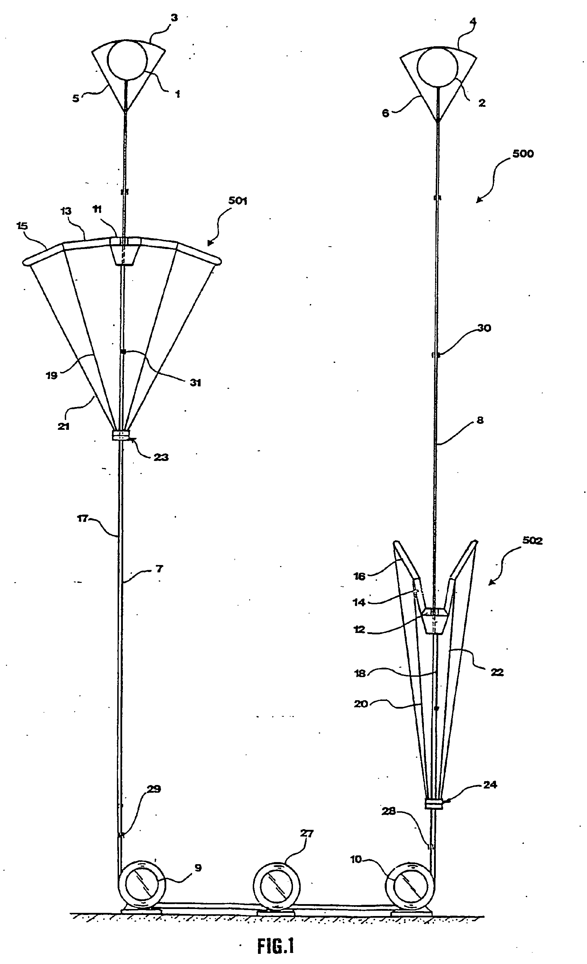

With reference to Figures 1 to 5, a plant for the conversion of wind flow energy into electrical energy according to the invention mainly comprises an apparatus for the conversion of wind flow energy into mechanical energy exploitable by users, generally indicated by 500, and additional components for carrying out the conversion of this mechanical energy into electrical energy.

The apparatus 500, in its turn, comprises mainly:

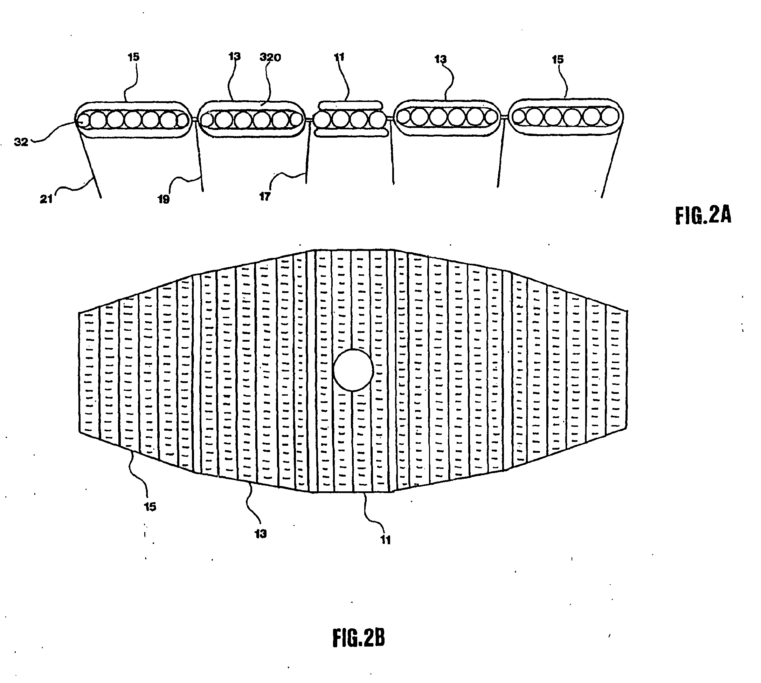

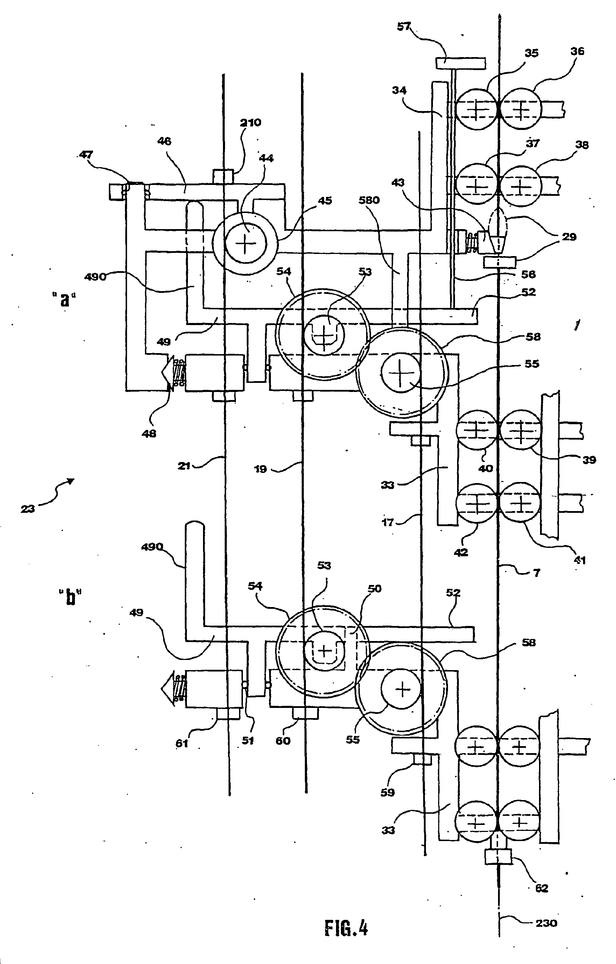

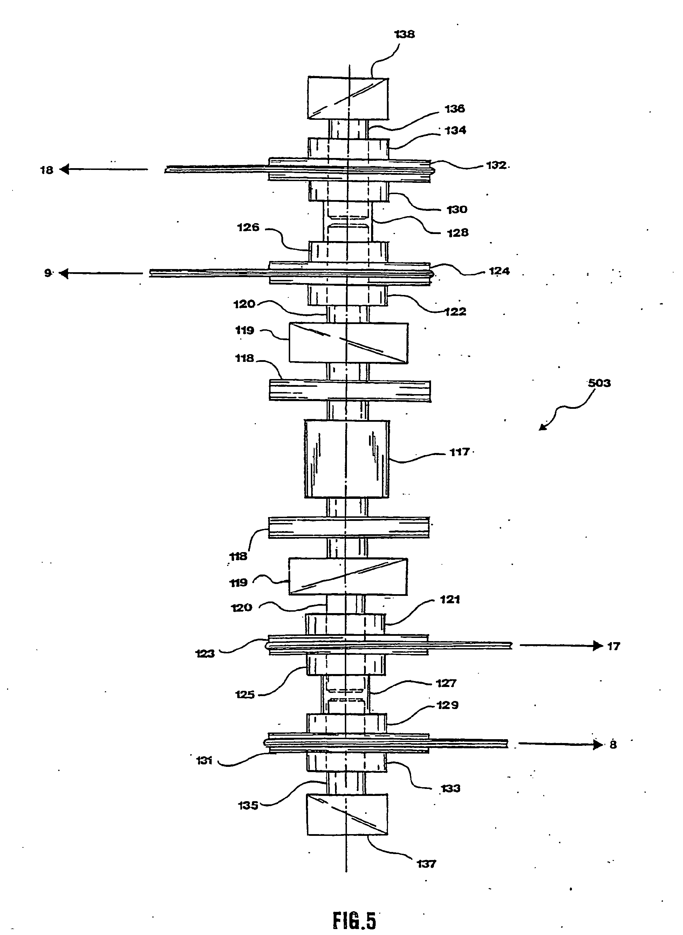

- a pair of wing devices, and in particular a first device 501 and a second device 502, slidable each along a respective guide tension rod 7, 8 and depicted in Figures 1 and 2A, 2B;
- two aerostats 1 and 2, each connected to a respective wing device 501, 502, only schematically depicted in Figure 1;
- a first and a second unfolding device, 23 and 24 respectively, each apt to cause the passing of a respective wing device 501, 502 from an unfolded, i.e. opened, configuration to a folded (closed) configuration, depicted schematically in Figure 1 and in greater detail in Figure 4; and
- means for adjusting the free development length of the guide tension rods 7 and 8, shown in Figure 5, which in the present embodiment are of the friction kind, where for 'free development length' the in-air extension of the tension rods themselves is meant.

Each wing device 501, 502 sets in motion a respective first or second driving tension rod, indicated by 17 and 18, respectively, the mechanical energy of which is then transformed into electrical energy in a conversion system 503, the latter being schematically depicted in Figure 5.

Each of the components hereto introduced will now be detailed with reference to Figures 1 to 5.

With initial reference to Figure 1, each aerostat 1, 2 is connected, at the external surface 3, 4 thereof, to a respective guide tension rod 7, 8 by means of one or more aerostat tension rods 5, 6.

Each guide tension rod 7, 8 further cooperates, at the opposite side with respect to the connection to the aerostat 1, 2, with a respective transmission element, in particular a wheel 9, 10, rotatably connected to a base surface, typically a floor, a platform or directly the ground. The transmission element 9, 10 deviates the respective guide tension rod 7, 8 toward a single central wheel 27, it also connected to said base surface and interposed between the two transmission elements 9 and 10. The wheel 27 feeds the guide tension rods 7, 8 to the abovementioned means for adjusting the free development length of the guide tension rods themselves, and moreover it is associated with the energy conversion system 503.

Moreover, the guide tension rods 7 and 8 have, between the respective aerostat 1, 2 and the portion usually cooperating with the respective transmission element 9, 10, respective lower end-of-stroke means, depicted very schematically in Figure 1 and indicated by 29 and 28, respectively, defining a lower stop position for the respective wing devices 501 and 502, and respective upper end-of-stroke means 31 and 30, which, analogously, provide an upper stop position for the wing devices 501 and 502.

As mentioned above, each guide tension rod 7, 8 serves just as a guide for a respective first or second wing device 501, 502 between said upper 30, 31 and lower 28, 29 end-of-stroke means.

Owing to reasons that will be made apparent hereinafter, the driving tension rods 17 and 18 are connected the one to the other one, and in particular integral the one to the other one, at the level of said central wheel 27, so that the upward motion of the one causes a downward motion of the other one and vice versa.

With reference also to Figures 2A and 2B, the first wing device 501 has a flexible structure, and it is generally assimilable to a sail. The device 501 has, in the abovementioned unfolded configuration, an aerodynamic profile. In the present embodiment, the device 501 is formed by five wing elements, arranged side-by-side and flexibly, i.e. rotatably, connected the one to the other one at respective end edges. In particular, the device 501 comprises a central wing element 11, having centrally a seat for the passage of the first guide tension rod 7, two intermediate wing elements 13, flexibly connected to the central element 11 from opposite sides thereof, and two side wing elements 15, each flexibly connected along an end edge thereof to a respective intermediate element 13 at the opposite side with respect to the connection of the latter to the central element 11.

As it is shown in Figure 2A, each of the wing elements 11, 13 and 15 has, in a cross section, a sandwich construction, internally comprising one or more chambers 32 of a substantially cylindrical shape, preferably made of a thin polymer film and Helium-inflated. These internal chambers 32 of each wing element 11, 13 or 15 are arranged the one parallel to the other one according to their direction of longitudinal development and are contained within a shaped external chamber 320.

Moreover, as it is shown always in Figure 2A, said flexible connection among the various wing elements forming the device 501 is made at the coupling of respective tension rods to respective tension rods. In particular, the central wing element 11 is flexibly connected, at its side edges, to the driving tension rod 17, and at the top is made of two portions and developing substantially parallel to the guide tension rod 7 in the configuration of Figure 1.

Each intermediate wing element 13 is flexibly connected, at the opposite side with respect to the respective driving tension rod 17, to an intermediate opening tension rod 19. Analogously, each side wing element 15 is flexibly connected, at the opposite side to the respective intermediate opening tension rod 19, to a side opening tension rod 21.

As it is shown in Figure 1, the opening tension rods 19 and 21 and the driving tension rod 17 connect said wing elements 11, 13 and 15 to the first unfolding device 23.

The second wing device 502 is identical to the first device 501, comprising in particular a central wing element 12, a pair of intermediate wing elements 14, a pair of side wing elements 16, and respective intermediate opening tension rods 20, side opening tension rods 22 and the driving tension rod 18 connected to the second unfolding device 24.

As it is shown always in Figure 1, the overall arrangement hereto described is such that each wing device 501, 502 is movable from the closed or folded configuration (like the second device 502 in Figure 1), in which the intermediate 13, 14 and side 15, 16 wing elements are substantially side-by-side and parallel or near-parallel to the respective guide tension rod 7, 8, to the opened or unfolded configuration (like the first device 501 in Figure 1), in which all the component wing elements are just unfolded sail-like, developing substantially orthogonal to the respective guide tension rod 7, 8, and in particular substantially horizontal thereto.

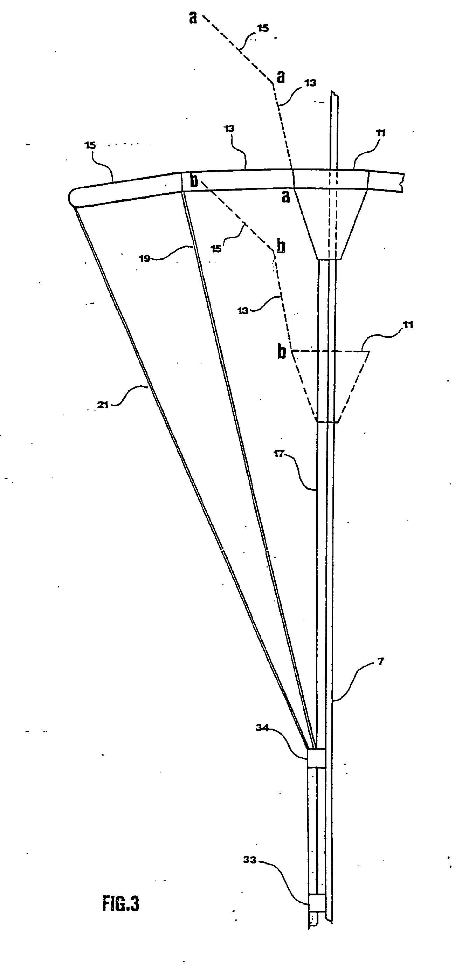

The viable operative configurations of the wing devices 501 and 502 will be better understood with reference also to Figure 3, referring to the first wing device 501. In this latter figure, the opened configuration of the device 501 is depicted in solid lines, whereas the closed one, in two different operative positions, is hatched. In particular, the top operative position, indicated by "a", corresponds to the downward motion of the wing device 501 while the latter gets near to the lower end-of-stroke means 29 onto the guide tension rod 7. The bottom operative position, indicated by "b", corresponds instead to the situation in which the lower end-of-stroke means 29 are into contact with the unfolding device 23.

The first unfolding device 23 will hereinafter be described in detail with reference to Figure 4, whose top and bottom portions refer to the operative positions indicated in Figure 3 by 'a' and 'b', respectively. For simplicity's sake, in Figure 4 there was depicted merely one half of the device at issue, the latter being perfectly symmetrical with respect to its own vertical central axis 230, and therefore also the related description will be made with reference to said half.

With reference to said Figure, and in particular to the operative position 'a' of the device 501, the unfolding device 23 comprises a bottom trolley and a top trolley, 33 and 34 respectively, each slidable along the guide tension rod 7 by means of two pairs of vertically aligned wheels indicated by 35, 36 and 37, 38 for the top trolley 34 and by 39, 40 and 41, 42 for the bottom trolley 33. Of course, these pairs of wheels are rotatably supported on a respective chassis of the top 34 and bottom 33 trolleys.

The top trolley 34 comprises, below to and in line with said pairs of wheels 35, 36 and 37, 38, first reversible locking means 43, e.g. of release type with return spring, to lock the trolley 34 with the lower end-of-stroke means 29.

Sideways to the means 43, the top trolley 34 further comprises a pulley 44, supported on a cross member of the chassis of the trolley itself and having a gear 45. Said pulley 44 cooperates with the external opening tension rod 21, which is wound thereon.

The gear 45 is apt to be locked by a tooth of a first arm or cross member 46, fastenable by second reversible locking means 47, e.g. of release type with return spring, to the chassis of the top trolley 34, above the former. However, in the position 'a', the means 47 are disengaged (this condition is indicated very schematically in the figure), and therefore the pulley 44 can rotate.

The bottom trolley 33 is connected to the top trolley 34 by third reversible locking means 48, them also e.g. of release type with return spring.

Onto the bottom trolley 33 there is installed, by means of fourth reversible locking means 51 arranged sideways to the axis 230 of the device 23, a second arm or cross member 49, substantially parallel to the first arm 46.

The second arm 49 has, at the side of the axis 230, an end portion 52 arranged so as not to interfere with the lower end-of-stroke means 29 when the trolley 33 slides onto the guide tension rod 7, yet so as to contact the upper end-of-stroke means 31 when the trolley gets near thereto. For this purpose, the end portion 52 has an element 56 vertically developing and ending, at the free end thereof, with a stop contact 57. The vertical element 56 passes through guide holes of the top trolley 34.

Moreover, the second arm 49 is apt to interfere, by a side projection 490 thereof, with the first arm 46 to cause the disengagement of the second reversible locking means 47.

Onto the arm 49 there is also mounted, in an intermediate position, a pulley 53 having a gear 54. Said pulley 53 cooperates with the intermediate opening tension rod 19, which is wound thereon.

The gear 54 engages a respective further gear 58 of a pulley 55 mounted onto the chassis of the bottom trolley 33, below the arm 49. Said pulley 55 cooperates with the driving tension rod 17, which is just wound thereon. The arrangement is such that, always in the operative position 'a', the gear 58 is locked by a tooth 580 integral to the chassis of the top trolley 34. Hence, in this position 'a' the pulley 55, and accordingly the pulley 53, cannot rotate, and therefore also the tension rods, driving 17 and intermediate opening 19, respectively, are locked with respect to said pulleys.

At the tension rods 7, 17, 19, 21, there are arranged respective bottom stops 62, 59, 60, 61, apt to abut onto the bottom face of the chassis of the bottom trolley 33. In the operative position 'a' considered here, the bottom stops 59, 60 and 61 are actually abutted on said chassis.

Moreover, on the side opening tension rod 21 there is arranged a further top stop 210, apt to abut on a top face of the top trolley 34 and to cause the closure of the second reversible locking means 47.

The unfolding device 24 related to the second wing device 502 is in all analogous to the hereto described one.

The energy conversion system 503 will now be detailed with reference to Figure 5.

In the present embodiment, the system 503 mainly comprises an electrical generator 117, associated with flywheels 118 arranged at opposite sides of the latter and to gearboxes 119, each adjacent to a respective flywheel 118. The gearboxes 119 are connected via a shaft 120 and clutches 121 and 122 to driving wheels 123 and 124, in turn connected to the driving tension rods 17 and 18 hereto introduced. At the opposite side with respect to the connection to the respective clutch 121, 122, each driving wheel 123, 124 is connected via clutches 125, 126 to freely rotatable shafts 127 and 128, the latter in turn engaged on respective stationary shafts 135 and 136. To such stationary shafts 135 and 136 there are connected respective guide wheels 131 and 132 via respective clutches 133 and 134. At the opposite side with respect to the connection to the shafts 135 and 136, the guide wheels 131 and 132 are connected to the freely rotatable shafts 127 and 128 via respective clutches 129 and 130.

Moreover, the system 503 is connected to the base surface by end supports 137 and 138.

The guide tension rods 8 and 9 are instead connected to the guide wheels 132 and 131, respectively, implementing the abovementioned means for adjusting the length of free development of the tension rods themselves.

The system 503 hereto described also comprises switching means (not shown) for allowing to always keep the same direction of rotation of the electrical generator 117 regardless of the position of the wing devices 501 and 502.

Since the individual components of the system 503 and their modes of interaction are conventional and known to a person skilled in the art, a further description thereof will be omitted.

The operation steps of the apparatus 500 and of the associated plant will hereinafter be described with reference to Figures 1, 4 and 5.

First of all, the apparatus 500 should be prearranged by positioning the aerostats 1 and 2 at a prescribed height with respect to the ground, suitably adjusting the length of free development of the guide tension rods 7 and 8.

Then, the first and the second wing device 501 and 502 should be positioned at a predetermined height along the respective guide tension rods 7 and 8, suitably adjusting the length of free development of the respective driving tension rods 17 and 18, so that both the wing devices 501, 502 be in a closed configuration, and that one of the two devices 501, 502, e.g. the first device 501, be in its topmost position and the other one in its bottommost position, as it is shown in Figure 1.

Then, an operation cycle can begin: the second device 502 ascends upwards, unfolding, and the associated driving force is transferred, by the driving tension rod 18, to the conversion system 503. Moreover, by means of this latter system, and by virtue of the connection between the driving tension rods 17 and 18, the driving force of the ascending second device 502 shifts the first device 501 downward.

In order to illustrate the operation modes of the unfolding devices 23 and 24, let us imagine to start from a condition in which the second wing device 502 is unfolded and ascending due to the aerodynamic lift force of the wind, hereinafter referred to as driving force. The latter is yielded by the relation $R = C_r qS$, wherein R is just the driving force at issue, $C_r$ is the aerodynamic coefficient of R, S is the total area of the central 11, intermediate 13 and side 15 wing elements, and $q = \rho U^2/2$, where U is the wind speed and $\rho$ is the air density.

It will be appreciated that with a wing device having a sufficiently wide area S a useful driving force R can be produced even for low wind speeds.

Said driving force, or a fraction thereof, moves the driving tension rod 18, thereby being transmitted to the energy conversion system 503. As mentioned above, a fraction of this driving force is used to produce the simultaneous downward motion of the first wing device 501, by virtue of the connection between the driving tension rods 17 and 18.

With reference to Figure 4, let us imagine to start from a condition in which the first wing device 501, descending downward in a closed configuration, is in the 'a' operative position described hereto.

When the first device 501 attains said operative position 'a', the top trolley 34 of the unfolding mechanism 23 is locked with the lower end-of-stroke means 29 by the first reversible locking means 43.

The system is preset so that, by virtue of the dragging action carried out by the driving tension rod 17 onto the bottom trolley 33 by the pulley 55, the bottom trolley 33 itself be released from the connection to the top trolley 34, i.e. the third locking means 48 are disengaged. Accordingly, the bottom trolley 33 can continue its downward stroke. In this configuration, the gear 58 is free from the locking of the tooth 580 of the top trolley 34 and is apt to drag into rotation the gear 54 of the pulley 53 cooperating with the intermediate opening tension rod 19.

The position 'b' of the closed wing device 501 in Figure 3 corresponds to the position 'b' of the bottom trolley 33 in Figure 4. In the position 'b' the length of the tension rods 19 and 17 included between their securing points on the wing device 501 and the pulleys 53 and 55 remains about the same of the position 'a'. A small difference between said lengths may be caused by the variation of the aerodynamic force on the folded wing device, which can cause the winding or the unwinding of the tension rods 19 and 17 on the respective pulleys 53 and 55. Analogously, the length of the tension rod 21 form its securing spot onto the wing device 501 to the bottom stop 61 is substantially the same in the two positions 'b' and 'a'. In fact, in the hereto-considered condition of descent of the bottom trolley 33 toward the stop 62 of the guide tension rod 7, the second reversible locking means 47 are them also disengaged, and therefore the gear 45 is free.

In its bottommost position, the bottom trolley 33 meets the stop 62 of the guide tension rod 7. The arrangement is such that, simultaneously, the top stop 210 of the tension rod 21, acting onto the first arm 46, closes the locking means 47, thereby locking the gear 45. Thus, the length of the tension rod 21 from the top trolley 34 to the respective external wing element 15 becomes fixed.

Therefore, to sum up the mechanism hereto described, the wing device 501 reaches the lower end-of-stroke means 29 in a closed configuration and with the unfolding device 23 in an assembled configuration. Upon reaching such means 29, the bottom trolley 33 parts from the top trolley 34, and descends downward until reaching the bottom stop 62 of the guide tension rod 7. During such a descending motion of the bottom trolley 33, the device 501 remains in a closed configuration by virtue of the descent of the opening tension rods 19 and 21 and of the driving tension rod 17 integrally to the bottom trolley 33 at the respective pulleys 53, 44 and 55.

In this condition, also the second wing device 502 is in a closed configuration, and the aerodynamic forces on the two devices 501 and 502 are substantially equivalent.

Then, the aerodynamic force acting onto the central wing element 11 of the first wing device 501 starts to cause the ascent of the element 11 itself, which drags the bottom trolley 33 therewith, with the entailed unfolding of the device 501 according to the modes described hereinafter.

Let us imagine to start from the same operative position 'b' described hereto. During the ascent of the bottom trolley 33 toward the top one, the pulleys 55 and 53 are free to rotate, and therefore the intermediate opening tension rod 19 and the driving tension rod 17 wound thereabout enable the central 11 and intermediate 13 wing elements to move them also upward in a coordinated manner.

Concerning instead the side wing element 15, the external edge thereof is constrained to the side opening tension rod 21, in turn locked onto the pulley 44. Hence, each point of said external edge moves on a circular path of a radius equal to the distance between the point itself and the pulley 44. Since the central wing element I 1 keeps horizontal, the external edge of the external wing element 15 will move just toward the outside, i.e. toward left in Figures 3 and 4, causing the unfolding of the wing device 501. In particular, the more the external edge of the wing element 15 moves toward the outside and the central wing element 11 ascends, the greater is the aerodynamic force generated, providing a positive feedback to the unfolding step.

When the bottom trolley 33 reaches the top trolley 34, locking therewith at the locking (engagement) means 48, the first wing device 501 is totally unfolded. Then, the gear 58 is again locked by the tooth 580, and therefore the length of the tension rods 19 and 17 between the respective pulleys and the respective points of connection to the wing device 501 is fixed. The arrangement is such that, then, the first locking means 43 are disengaged by the same aerodynamic force generated by the unfolded wing device 501, and the latter starts to ascend.

When the wing device 501 reaches the upper end-of-stroke means 31, the stop contact 57 shifts upward the vertical element 56, and therefore the second arm 49, causing the disengagement of the fourth reversible locking means 51. The second arm 49, in turn, moves the first arm 46 and disengages the second reversible locking means 47, thereby releasing the pulley 44.

The gear 54 and the related pulley 53 are shifted upward by the second arm 49, disengaging the gear 58. Therefore, the pulleys 44 and 53 are free to rotate, causing an upward sliding of the side 21 and intermediate 19 opening tension rods, in a motion of closing the side 15 and intermediate 13 wing elements. This rotation continues until the stops 61 and 60 abut onto the bottom face of the bottom trolley 33. At this time, the second wing device 502 starts its unfolding, with an increasing aerodynamic force and, therefore, the first wing device 501 starts its descent. As a consequence of this descent, the rod 56, and accordingly the second arm 49, is released from the action of the upper end-of-stroke means 31, and therefore the second arm 49 descends downward by gravity and is locked by the means 51. Hence, the gear 54 is again locked by the gear 58.

In this closed configuration, the device 501 starts its descent.

Therefore, to sum up in general terms what has been specifically disclosed hereto, the guide tension rod 7 defines an operative path for the wing device 501 and for the associated unfolding device 23. Along this operative path, and in particular at predetermined positions defined by the end-of-stroke means 29 and 31 and by the unfolding device 23, the wing device 501 itself passes from an unfolded configuration, in which it provides mechanical energy to users by means of the driving tension rod 17 and therefore is definable as driving configuration, to a closed configuration, definable as resting. Therefore, always along this operative path, the wing device 501 alternatively describes a bottom-to-top forward stroke, definable as driving, and a top-to-bottom return stroke, definable as resting.

It will be appreciated that the unfolding devices and the associated components for modifying the configuration of the wing elements are of passive type, i.e. requiring no specific motoring or energizing.

In the transient occurring between the instant in which one of the two wing devices 501, 502 attains the completely closed configuration and the time at which the other device, by unfolding, begins to provide a substantial driving force, the movable components associated to the electrical generator 117 continue anyhow to rotate by virtue of the presence of the flywheels 118, providing a fraction of the accumulated energy to start a new cycle of the motion of the former.

It will be appreciated that the operative working height of the wing devices may be modified by adjusting the position of the upper and/or lower end-of-stroke means onto the guide tension rods. In other words, this is tantamount to modifying the length and/or the arrangement of the respective operative paths of the wing devices.

According to a preferred variant embodiment, this height can also be adaptively modified in operation, by providing means for measuring the torque provided by one or both of the driving tension rods and varying the operative height until the torque value reaches the desired maximum value. Such a measuring may be carried out on a suitable measure shaft, at the level of the central wheel 27 and/on onto the same main shaft of the energy conversion system.

It will be understood that in another variant embodiment the unfolding device 23 and the components cooperating therewith may be replaced by alternative means anyhow apt to vary the configuration of the wing device 501 from the driving configuration to the resting configuration, and vice versa, at predetermined positions along the operative path thereof.

The wing devices hereto described may also be installed each on a respective watercraft, the two watercrafts moving between opposite bank sides of a watercourse by virtue of the driving force generated by the wing elements themselves, which in the present case serve as actual sails.

Furthermore, a plant similar to the one hereto described can be employed for the production of electrical energy from the energy of a water flow, like e.g. a river or a channel. In such a case, the wing devices are arranged in the water, and their power stroke develops along guide tension rods extending between the opposite bank sides of the river or channel, so that they work in a direction substantially transversal with respect to the watercourse. Of course, the power stroke will be carried out according to a direction not perfectly orthogonal to the water flow, in order to allow the wing devices to best exploit the driving force of the latter.

Therefore, in this application, the extreme positions of the devices correspond to positions adjacent to opposite bank sides of the watercourse.

Moreover, the driving motion of the wing devices will be in all analogous to the one described above, i.e. the devices reciprocate from one bank side to the other one, alternatively unfolding and folding the respective wing elements.

Variant embodiments could also provide each wing device to assume, along its operative path, a plurality of different configurations, some of which, for instance, genuinely driving and others resting.

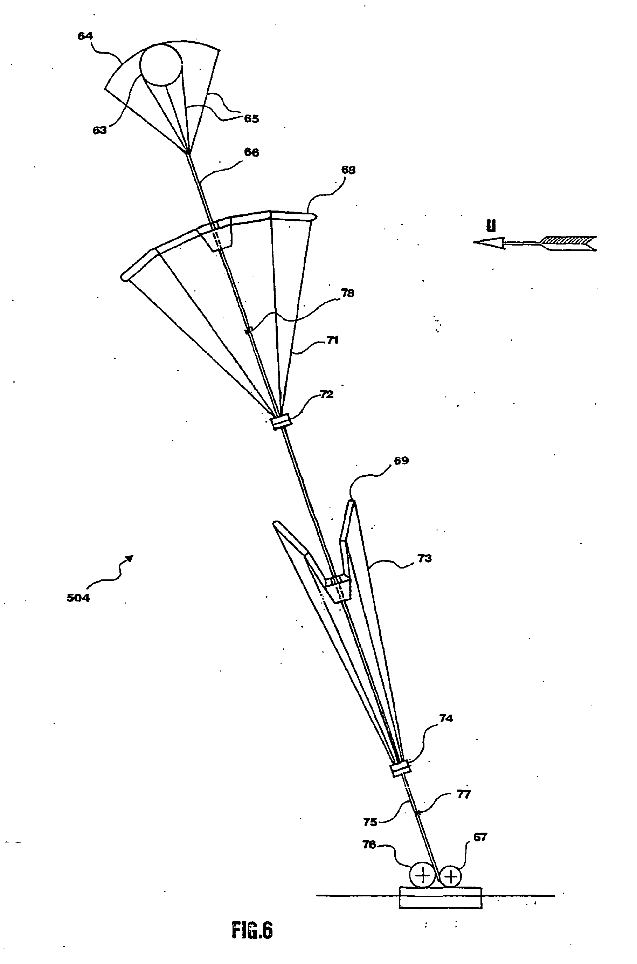

A second embodiment of the apparatus for the conversion of wind flow energy of the invention will be described hereinafter with reference to Figure 6.

An apparatus 504 comprises a first and a second wing device, in this case indicated by 68 and 69 and analogous to those of the first embodiment, movable along a common guide tension rod 66. Hence, in this case the operative paths of the two devices are aligned.

The guide tension rod 66 is connected to the external surface 64 of a common aerostat 63 by aerostat tension rods 65, and it cooperates, at the opposite end, with a transmission element 67, in particular a wheel. The latter is associated, as in the first embodiment, to clutch means for modifying the length of free development of the guide tension rod 66.

The first wing device 68 moves along the top portion of the guide tension rod 66, whereas the second device 69 slides along the bottom portion of the tension rod 66, both in the position included between the aerostat 63 and the transmission element 67.

The device 68 is connected, via first opening tension rods 71, to a first unfolding device 72 and, analogously, the device 69 is connected, via second opening devices 73, to a second unfolding device 74, said unfolding devices being analogous to those hereto described with reference to the first embodiment disclosed above.

Moreover, both devices 73 and 74 are connected, by driving tension rods 75, to an element 76 of a gearbox of an energy conversion system in all analogous to that described with reference to the first embodiment.

Onto the guide tension rod 66 there are adjustable end-of-stroke means 77 and 78 for the devices 68 and 69, respectively.

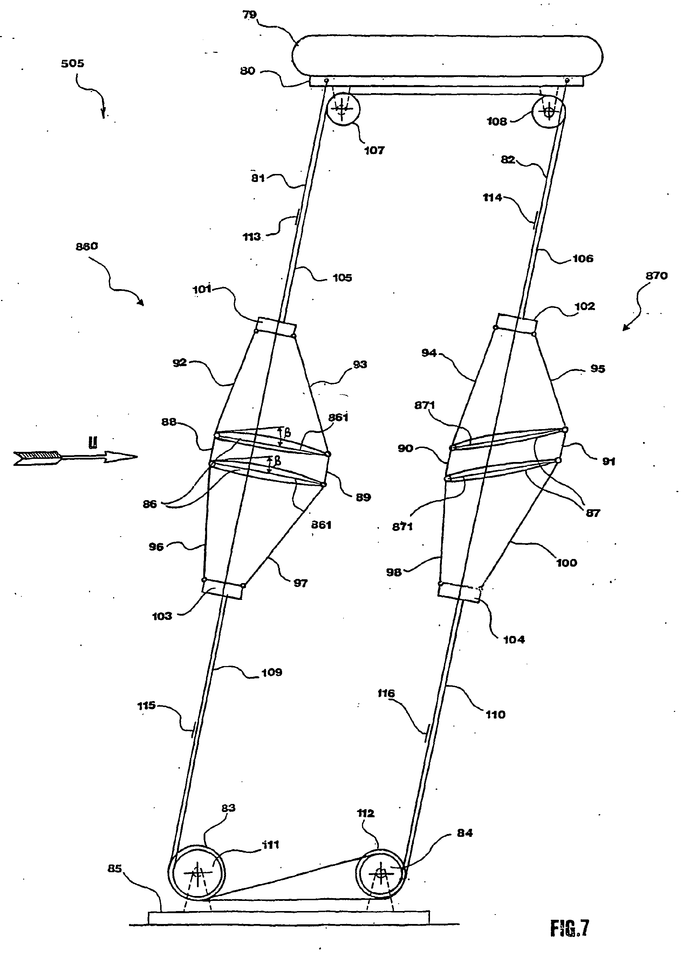

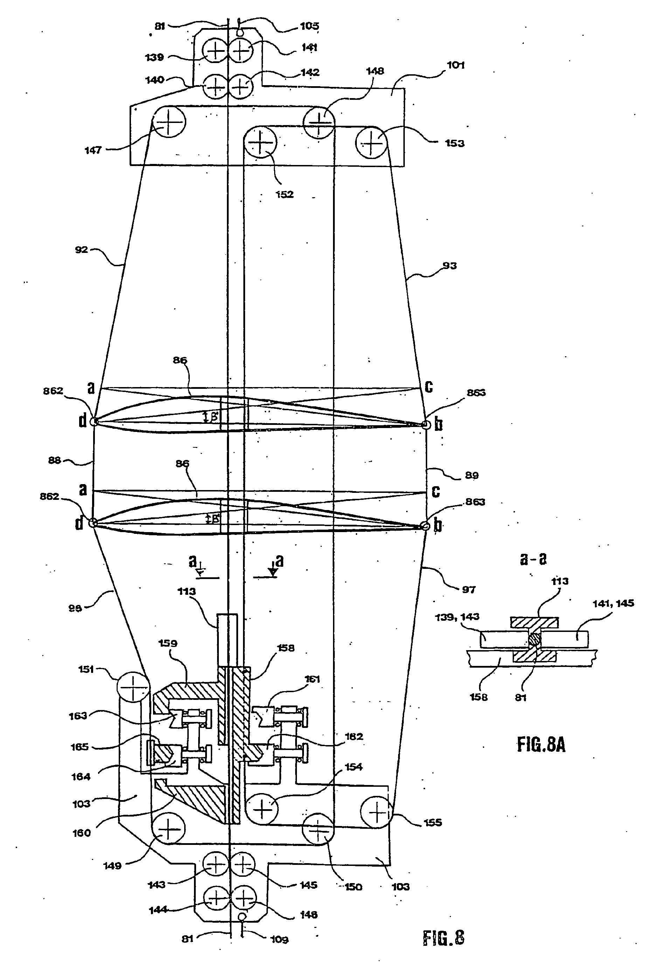

A further embodiment of the apparatus of the invention will be described hereinafter with reference to Figures 7 and 8.

With initial reference to Figure 7, in this case as well the apparatus, indicated by 505, comprises an aerostat 79, here equipped with a cross member 80 to which.there are attached two guide tension rods 81 and 82 substantially analogous to those of the first embodiment. The latter are connected, via transmission elements 83 and 84, respectively, to a clutch mechanism implementing means for varying the length of free development of the guide tension rods 81 and 82 themselves. The elements 83 and 84 and the clutch mechanism are installed on a ground platform 85.

A first and a second wing device 860 and 870, in this case having a substantially rigid structure, slide along the guide tension rods 81 and 82, respectively. Each of said devices 860, 870 has a respective pair of wing elements 86, 87, having an aerodynamic profile. The wing elements 86, 87 of each pair are arranged with their respective chord lines 861, 871, related to the cross, intermediate and parallel sections and generally oriented in a direction substantially orthogonal to the respective guide tension rod 81, 82. Moreover, the wing elements 86, 87 of each pair are connected, at their own side ends, by rigid struts, indicated by 88, 89 and 90, 91, respectively, so that the struts themselves and the chord lines 861, 871 of the elements of the respective pair form a four-bar linkage.

Each first wing element 86, 87, i.e. the top wing element of the pair, is connected to a respective top trolley 101, 102, by first adjustment tension rods 92, 93 or 94, 95 extending at the side ends of the wing element itself. Analogously, each second wing element 86, 87, i.e. the bottom wing element of the pair, is connected to a respective bottom trolley 103, 104, by second adjustment tension rods 96, 97 or 98, 100 extending at the side ends of the wing element itself. Also the trolleys 101, 103 and 102, 104 are slidable along the respective guide tension rod 81 or 82.

Variant embodiments could provide for each wing device a different number of wing elements and therefore a different arrangement of the connections to the bottom and top trolleys.

The top trolleys 101 and 103 are connected to respective driving tension rods 105 and 106 cooperating with top transmission elements 107 and 108, in particular pulleys, rotatably supported onto the ends of the cross member 80 of the aerostat 79. Analogously, the bottom trolleys 103 and 104 are connected to respective driving tension rods 109 and 110, and the latter, through bottom transmission elements 111 and 112 them also implemented by pulleys, are connected to an energy conversion system installed onto the ground platform 85 and analogous to that already described with reference to the first embodiment. The motion range of the wing devices 860, 870 is restricted by top 113, 114 and lower 115, 116 end-of-stroke means on the guide tension rods 81, 82.

In Figure 8 there is depicted in greater detail one of the wing devices described with reference to Figure 7, and in particular the first wing device 860, with the associated bottom 103 and top 101 trolleys.

The guide tension rod 81 crosses central holes of the wing elements 86 and cooperates with the top 101 and bottom 103 trolleys through twin pairs of aligned wheels 139, 140, 141 and 142 for the top trolley 101 and 143, 144, 145 and 146 for the bottom trolley 103.

In Figure 8 it is apparent how the first adjustment tension rod 92 and the second adjustment tension rod 96 are made integral the one to the other one, and analogously for the first tension rod 93 and the second tension rod 97.

The apparatus 504 comprises means for varying the configuration of the wing elements 86, and in particular means for varying the tilt - or 'angle of attack' - thereof, i.e. of the angle, indicated by β in Figure 7, that the chord lines 861 form with the horizontal. Therefore, in use such means is apt to modify the orientation of the wing elements with respect to the direction of the incident flow.

Such means comprises two control circuits for controlling the position of the end side edges of the wing elements, which will be referred to as leading edge and trailing edge, respectively, and that are denoted by 862 and 863 in Figure 8.

The control circuit for the leading edges 862 comprises the first adjustment tension rod 92, the strut 88, the second adjustment tension rod 96, transmission pulleys 147 and 148 of the top trolley 101 and transmission pulleys 149, 150 and 151 of the bottom trolley 103.

The control circuit for the trailing edges comprises the adjustment tension rod 93, the strut 89, the tension rod 97, transmission pulleys 152 and 153 of the top trolley 101 and transmission pulleys 154 and 155 of the bottom trolley 103.

Moreover, on the bottom trolley 103 there are installed double reversible locking means, and in particular first and second means 161 and 162, e.g. of release type with return spring, arranged the first upward and aligned to the second and apt to lock the position of the trailing edges 863. Additionally, the bottom trolley 103 has further double reversible locking means, and in particular third and fourth means 163 and 164, them also e.g. of release type with return spring and arranged the ones upward and aligned to the other ones, to lock the position of the leading edges 862.

Onto the adjustment tension rod 96 there is installed a toothed element 165 apt to cooperate with the third or fourth locking means 163 or 164, according to the position of the leading edges 862.

Analogously, onto the adjustment tension rod 97 there is installed a locking element 158 provided with a tooth apt to cooperate with the first or second locking means 161 or 162, according to the position of the trailing edges 863.

Moreover, the locking element 158 has arms 159 and 160 apt to abut onto the toothed element 165 in operation of the means for varying the angle of attack.

Lastly, the element 158 has a longitudinal seat for the passage of the guide tension rod 81.

The arrangement is such that the locking element 158, in the top extreme position of the device 860, abuts onto the upper end-of-stroke means 113 of the guide tension rod 81, and, in the bottom extreme position of the device 860, abuts onto the lower end-of-stroke means 115 thereof.

Figure 8A shows in greater detail the specific implementation of the upper end-of-stroke means 113, to highlight how the latter pass through the wheels 139, 140 and 141, 142 of the top trolley 101 and how the means 113 abut onto the element 158.

The operation modes of the apparatus of this third embodiment, and in particular those of the means for controlling the angle of attack, will hereinafter be illustrated in greater detail.

Let us imagine to start from a configuration in which the device 860 moves upward with an angle of attack $\beta$ corresponding to the position indicated by 'a' of the leading edges and to the position 'b' of the trailing edges in Figure 8. By convention, we will define such an angle of attack as positive angle (considering a system with origin in 'a', the chord line 861 overlaps to the horizontal by rotating counterclockwise). The tooth of the element 158 is locked with the first locking means 161 and the toothed element 165 is locked with the third locking means 163. When the wing device 860 arrives into the top position, the end-of-stroke means 113 lock the element 158, causing an upward tilting of the trailing edges 863, which move toward position 'c' due to the aerodynamic lift force (whose sense is indicated by an arrow U in Figure 7). Simultaneously, by means of the adjustment tension rod 97, which is attached to the trailing edges 863, the element 158, and therefore the tooth thereof, slides downward, passing to engage the bottom locking means 162. At the same time, the arm 159 of the element 158 releases the tooth 165 from the third locking means 163, concomitantly causing a downward motion, and in particular toward position 'd', of the leading edges 861, assisted by the aerodynamic lift force. Such a motion continues until the tooth 165 locks in the fourth locking means 164 and the leading edges 862 of the wing elements 86 are in the position 'd'.

Then, the system has evidently reached a negative angle of attack $\beta'$. Such a negative angle makes the aerodynamic action of the wind apt to shift the wing elements 86 downward. In the bottommost position of the latter, the lower end-of-stroke means 115 of the guide tension rod 81 lock the element 158, causing, by virtue of the aerodynamic force, a downward motion of the trailing edges from the position 'c' to the position 'b'. In the position 'b', the tooth of the element 158 locks in the first locking means 161 and the bottom arm 160 releases the tooth 165 from the fourth locking means 164, causing the leading edges 862 to move, pushed by the aerodynamic force, from the position 'd' to the position 'a'.

Then, the tooth 165 is locked in the third locking means 163 with the positive angle of attack $\beta$ seen above, and the wing device 860 restarts the upward ascent.

The motion of the second wing device 870, device in all analogous to the first one, takes place according to angles of attack opposite to the hereto illustrated ones. In particular, the first device 860 continues its upward motion until the second device 870 meets the respective lower end-of-stroke means 116. Then, when the second device 870 changes its angle of attack until bringing it to zero, the first device 860 meets the respective upper end-of-stroke means 113. Then, the action of the aerodynamic force causes the two devices 860 and 870 to invert their angles of attack. The driving action of one of the two devices assists the motion of the other one device by providing the required tension of the adjustment tension rods 92, 93, 94, 95, 96, 97, 98 and 100.

It will be appreciated that the provision of a positive angle of attack equals to the unfolding procedure of the first embodiment, and the provision of a negative angle of attack equals to the closing procedure.

In this case as well, the wing devices can be used for the conversion of mechanical energy of a water flow into electrical energy. The devices, as in the preceding case, will be made to slide on guide tension rods arranged transversally with respect to the water flow, between one bank side and the other of the latter, so as to produce a reciprocating motion of the devices having a variable angle of attack. The latter motion is substantially identical to that described above, with the difference that it takes place on a substantially horizontal, rather than vertical, plane.

Hereinafter there will be illustrated another embodiment of the invention, referring to the application of an apparatus with wing elements having a variable tilting (angle of attack) analogous to that of the embodiment described with reference to Figures 7 and 8 for the conversion of the water flow energy of a current or of a tide into mechanical energy exploitable by users.

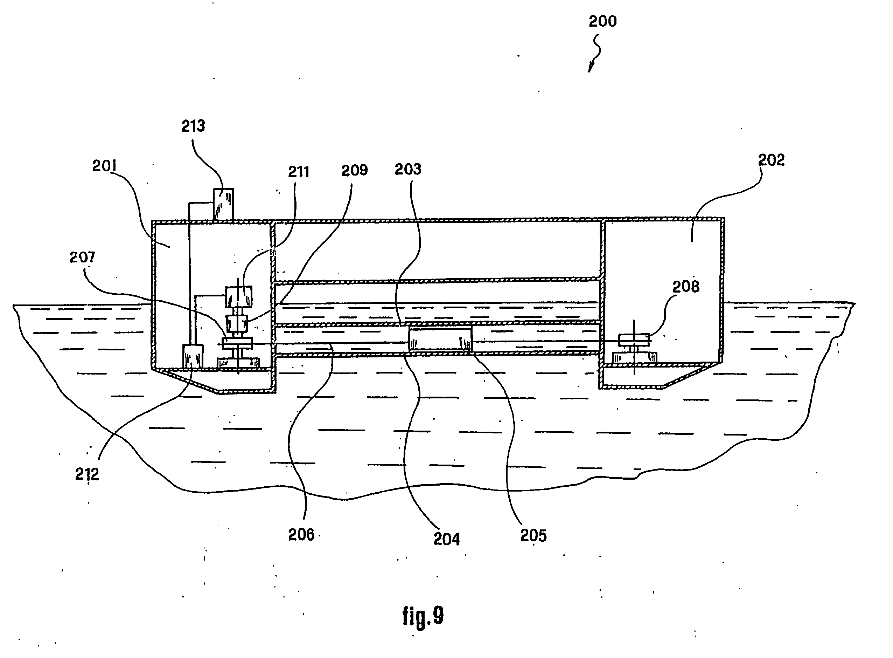

Referring initially to Figure 9, an apparatus for the conversion of energy according to the present invention consists in a catamaran-like watercraft 200, comprising a left portion 201 and a right portion 202 between which there are sandwiched one or more wing devices apt to arrange themselves, in use, below the surface of the water.

According to the depth of the water, the watercraft 200 itself may float or be totally submersed. It will be appreciated that, in sufficiently deep waters, the submersed configuration of the watercraft can be particularly useful as thus the latter does not hinder the path of other surface watercrafts.

In Figure 9, besides the main body of the watercraft 200 there can be seen a top guide cross member 203 and a bottom guide cross member 204 along which there moves a wing device 205, depicted only by way of indication in said Figure. The operation modes of this device will be illustrated in greater detail hereinafter.

Always in Figure 9, it can also be appreciated how the energy conversion apparatus according to the invention comprises also, for each wing device 205, a driving tension rod 206, e.g. a chain, apt to transfer the driving force from the respective wing device 205 to wheels 207 and 208. The latter are mounted on conventional bearings and are arranged each at a respective portion 201 or 202 of the watercraft 200. Therefore, the driving force applied onto the tension rod 206 generates a driving torque on said wheels 207 and 208.

From the wheel 207 the driving torque is transferred to a gearbox 209 connected to an electrical generator 211. The gearbox 209 comprises, as in the case of the first embodiment disclosed above, a flywheel and clutch mechanisms providing a constant sense of rotation for the generator 211 at a predetermined speed.

The electrical energy generated by the generator 211 is transferred, via transformers 212, to an electric line 213, which may be connected to coastal overhead lines or to underwater cables. Onto the left portion 201 of the watercraft 200 there are installed also electric control switches.

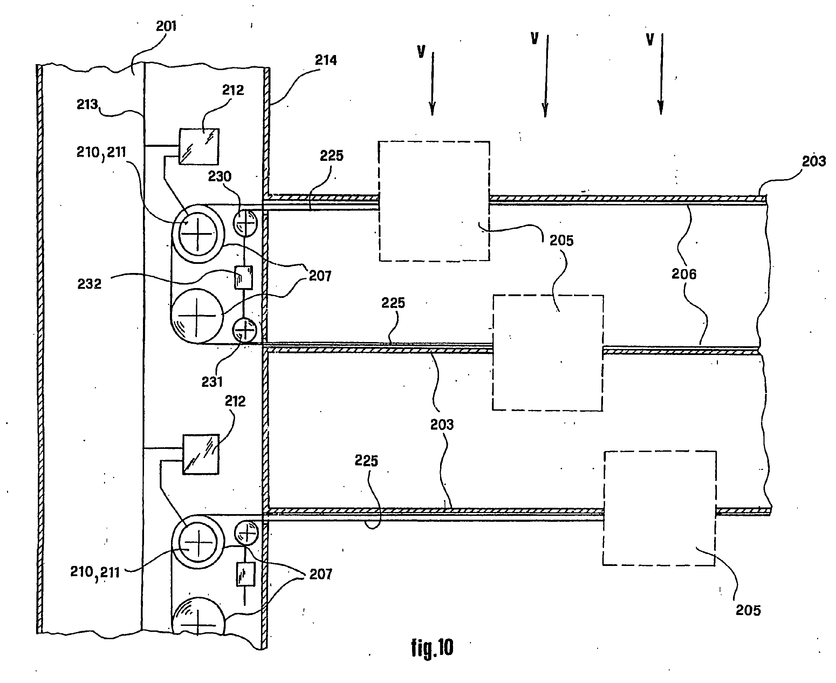

With reference now also to Figure 10, in the present embodiment the apparatus provides a plurality of horizontally side-by-side wing modules. Each module is formed by two wing devices, each indicated by 205, slidable to opposite directions along respective pairs of guide cross members 203 and 204. The cross members 203 and 204 of each pair are arranged vertically aligned and parallel, and each cross member 203, 204 is horizontally side-by-side and parallel to a respective cross member 203, 204 of the other pair.

When one of the wing devices 205 of a module reaches the left end of the watercraft 200 the other one reaches the left end, and vice versa. This reciprocating motion of the wing devices 205 of each module is due to the fact that the wing elements of each device modify their own angle of attack at one end of the path, by the method and the mechanisms illustrated hereinafter.

The wing devices 205 of each module provide a common control unit 232, whose role will be made apparent hereinafter.

As mentioned hereto, to each device 205 there is associated a respective driving tension rod 206, passing through walls 214 of the left 201 and right 202 portions of the watercraft 200, at suitable seals installed on suitable ports of said walls.

Moreover, to each wing device 205 there is associated also a control cable 225. The control cables 225 extending from both the wing devices 205 of a module can be wound on wheels 230 and 231. The latter are operated by motors controlled by the control unit 232 so as to rotate synchronically with the main wheel 207.

As mentioned hereto, in the present embodiment it is provided that onto the watercraft 200 there be installed various modules as the one described, arranged side-by-side and working together to supply electrical energy to the line 213.

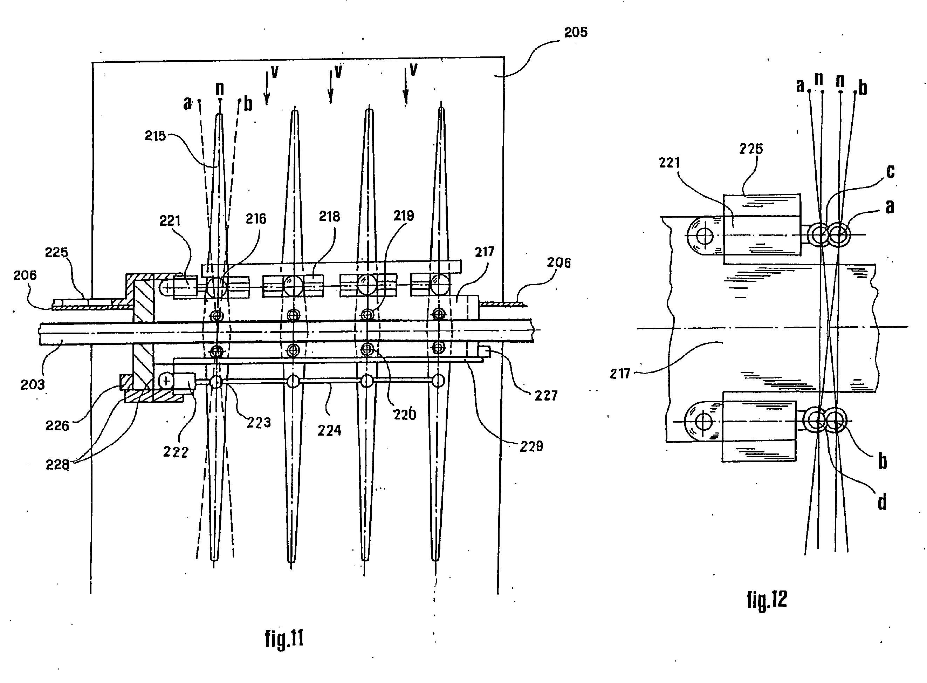

In Figure 11 there is schematically depicted an individual wing device 205. With reference to this latter figure, the device 205 mainly comprises: a plurality of wing elements 215; two electric drives, indicated by 221 and 222, connected by pins, like e.g. those indicated by 216 and 223, and rods, like e.g. those indicated by 218 and 224, to the wing elements 215 of the device 205; and a trolley 217, to which there are connected, by hinges, the rear ends of said drives 221 and 222.

The pins 216 have wheels that are in sliding contact with the guide cross members of the trolley 217. The trolley 217 has two symmetrical parts, arranged the one above and the other one below the wing elements, each one slidably coupled to a respective guide cross member 203 or 204 by respective wheels. In particular, the top part (the sole one visible in Figure 11) is slidable by pairs of wheels 219 and 220 along the cross member 203 and the bottom part is slidable along the cross member 204 by wheels arranged symmetrically to the preceding ones. These two parts of the trolley 217 are connected the one to the other one upstream and downstream of the wing device 205 itself by plates to which the respective driving tension rod 206 is attached. The driving tension rods 206 related to the two devices 205 of a module connect also the trolleys of the devices themselves.

Moreover, each wing element 215 is hinged onto the trolley 217 by two pins respectively arranged downstream and upstream of the middle of the chord line thereof.

In short, the wing elements 215 are pivotable with respect to the trolley 217 and the latter is slidable onto the guide cross members 203 and 204, i.e. with respect to the chassis of the watercraft 200.

Moreover, onto the right and left ends of the trolley 217 there are installed end-of-stroke means, and in particular electric switches 226 and 227 apt to provide a control signal, and specifically an end-of-stroke signal, to the control unit 232 when the wing device 205 reaches the end of its path onto the guide cross members. These switches 226 and 227 are connected to control circuitry of the apparatus of the invention by related roll-up cables 228 and 229.

The device 205 further provides a power supply and the abovementioned control cable 225, which travels along the driving tension rod 206 toward the left part of the watercraft 200 in which there is installed said control unit 232.

Figure 12 illustrates the operation modes of the mechanism of the angle of attack of the wing elements with reference to a device 205 arranged at the left end of its stroke. For simplicity's sake, in said Figure 11 the wing elements 215 have been depicted by their chord lines.

With reference to this latter figure, when one of the wing devices 205 of a module reaches the left end of the guide cross members and the other wing device of the module reaches the right end of said members, the switch 226 of the first device and the switch 227 of the second device come into contact with complementary stop means installed onto the cross members 203 or 204 (not shown in the figures). The signals sent from the switches 226 and 227 to the control unit 232 initiate the procedure for the control of the angle of attack.

The first device 205 that reaches the left end of the guide cross members has wing elements in position 'A', providing a leftward driving action. The second wing device 205 that reaches the right end of the guide cross members has wing elements in position 'b', providing a rightward driving action.

Let us now consider the procedure for the control of the angle of attack of the first device 205. The position of the pin 216 onto the rod related to the drive 221 is point 'c' and the position of the pin 223 onto the rod related to the drive 222 is point 'b'. In order to use the water flow force and to minimize the operation load, the angle of the wing element 215 is changed with the steps illustrated hereinafter.

I. Owing to the signal from the switch 226, the pin 223 is moved into position 'd' by the control 222 with the aid of the hydrodynamic force, whereas the pin 216 remains in the point 'c'. Therefore, the wing element will have neutral position 'N1'.

II. The pin 223 remains in position 'd', whereas the pin 216 is moved into position 'a' by the drive 221 with the aid of the hydrodynamic force. Now the angle of attack has changed sign and the wing element will have position 'B', providing a rightward thrust. Therefore, the first device 205 will shift rightward until reaching the right stop.

III. Upon reaching the right end of the watercraft 200 by the first device 205, the control 222, owing to the signal from the switch 227, will move with the aid of the hydrodynamic force the pin 223 from position 'd' to position 'b', whereas the pin 216 remains into point 'a'. The wing element will now be in the neutral position N.

IV. The pin 223 remains into point 'b', and the drive 221 with the aid of the hydrodynamic force will move the pin 216 from the position 'a' to the position 'c'. The angle of attack changes sign and the wing element will now be in position 'A', providing a leftward driving action. Hence, we have come back to the initial position of the first wing device from which we have started the control actions.

Said control actions are repeated periodically and are the same for the first and the second wing device, only staggered. The other wing elements of the device repeat the motion of the first element as they are all connected together by the pins and the rods in a parallelogram (four-bar) structure.

It will be understood that, analogously to the other embodiments described hereto, the driving action obtained with the wing elements is transferred to the driving tension rods and therefrom to the energy conversion system.

In use, the watercraft described hereto will be oriented current flow wise by suitable anchoring systems or by other control systems.

As seen above, in this case as well a preferred variant embodiment provides that the drives causing a variation in the position of the wing elements be connected to means for measuring the torque provided by the driving tension rods, so that the entity of the shift caused by such drives may be adaptively adjusted in order to attain the desired maximum efficiency of the apparatus.

It will be appreciated that the apparatus hereto described entails significant ecological advantages and it can be used adaptively for hydrogeological situations considering the extant sailing techniques of river, lake or sea watercrafts.

By way of example, there may be considered the application of the system in a great river, like, e.g., the Severn river in Great Britain. This river runs very deep, having a width of several kilometers, and a length of over 250 km. Therefore, in such a river it is possible to use underwater and anchored watercrafts in some zones and floating watercrafts in others. Considering a catamaran watercraft of a length equal to about 100 m and of a width equal to about 25 m, it is possible to place 10 100 kW modules on such a watercraft. Therefore, the power of the entire system will be 1000kW=1MW. Assuming the river width available for an installation to be 1 km and the available length to be 10 km, we can consider that on such an area 4000 watercrafts may be used. Having a 1000 KW power for each such watercrafts, we can conclude the actual power value that can be generated in rivers like the considered one to be in the neighborhood of 4000 MW. Even if (due to losses of any kind) this value were three times less, it would still be sufficiently high for industrial standards.

Further embodiments of the apparatus of the invention could provide a combination of the wing devices of the different embodiments described hereto.

It will be understood that the present invention provides also a method for the conversion of wind or water flow energy into mechanical energy exploitable by users, comprising the steps of defined in claim 25.

Hereinafter, there will be provided some indications on the efficiency of the plant and of the method of the invention.

Concerning the first embodiment described with reference to Figures 1 to 5, it will be appreciated that the related unfolding devices allow elevated velocities of the associated wing devices, as the latter in a closed configuration produce a minimum drag.

The power values shown in the following Table 1 can be produced by an apparatus made according to the first embodiment disclosed hereto, with a total area of each wing element equal to about 100 m$^2$. The reported values were obtained by theoretical computations.

| TABLE 1 | | | | | | | | | | | | | | |
|---|---|---|---|---|---|---|---|---|---|---|---|---|---|---|
| wind speed (m/s) | 2 | 3 | 4 | 5 | 6 | 7 | 8 | 9 | 10 | 11 | 12 | 13 | 14 | 15 |
| driving force (kg) | 25 | 56 | 100 | 156 | 225 | 306 | 400 | 506 | 625 | 756 | 900 | 1056 | 1225 | 1406 |
| power (kW) | 0.22 | 0.5 | 1.76 | 2.75 | 6.0 | 8.1 | 10.5 | 12.5 | 27.5 | 33.0 | 39.7 | 46.5 | 54.0 | 62.0 |

Concerning the embodiment described with reference to Figures 7 and 8, the adjustment of the angle of attack provides a remarkable driving force, as both the wing elements produce a driving action and each wing device may comprise a plurality of wing elements. For suchlike devices the losses in the conversion of mechanical energy into electrical energy may reach levels of from 5 to 15%.

The power values disclosed in the following Table 2 can be produced by an apparatus according to this embodiment, wherein each of the two wing devices has four alike wing elements, of an overall total area S equal in a first example to about 300 m$^2$ and in a second example to about 1000 m$^2$. In particular, the aerodynamic and hydrodynamic forces were computed by using well-known data related to the aerodynamic and hydrodynamic lift and drag coefficients according to the formulas:

$$Y = C^{\alpha}_{y} \cdot \alpha q S, \quad X = C_x q S,$$

wherein Y is the lift acting onto the wing element when this is tilted of an angle of attack $\alpha$, X is the drag, $C^{\alpha}_{y}$ is the derivative with respect to $\alpha$ of the lift coefficient $C_y$, i.e. $C^{\alpha}_{y} = \dfrac{dC_y}{d\alpha}$, $C_x$ is the drag coefficient for a certain angle of attack, $q = \rho\, U^2/_2$ is the dynamic pressure, U is the speed of the wind or water, $\rho$ is the density of the air or water, S is the area of the wing device.

For $\alpha_{max} \leq 15°$, there can be assumed $C_{y\,max} = C^{\alpha}_{y} \alpha_{max} = 1$. In the present case $Y_{max} = qS$.

The power was computed by the formula:

$$W = R * V * \varsigma,$$

wherein R is the aerodynamic or hydrodynamic thrust force, V is the speed of the motion of the driving tension rod and $\zeta$ is the coefficient of conversion of mechanical energy into electrical energy. For the kind of system considered here it is assumed $\zeta \cong 0.75$.

| TABLE 2 | | | | | | | | | | | | | | | | |
|---|---|---|---|---|---|---|---|---|---|---|---|---|---|---|---|---|
| Wind speed (m/s) | | 2 | 3 | 4 | 5 | 6 | 7 | 8 | 9 | 10 | 11 | 12 | 13 | 14 | 15 |
| Power (kW) | S=300 m$^2$ | 0.66 | 1.5 | 5.28 | 8.25 | 18 | 24.3 | 31.5 | 37.5 | 82.5 | 99 | 119 | 139.5 | 162 | 186 |
| | S=1000 m$^2$ | 2.2 | 5 | 17.6 | 27.5 | 60 | 81 | 105 | 125 | 275 | 330 | 397 | 465 | 540 | 620 |

In order to decrease the volume required for each aerostat, the latter may be made in form of a lifting aerodynamic body. The aerodynamic lift force of the aerostat increase if the wind speed increases and becomes equal to the increasing driving force of the wing device.

From the analysis of Tables 1 and 2 there can be concluded that the devices advanced are effective also for a light wind (about 4 m/s) and become very effective under moderate wind conditions (about from 6 to 11 m/s). Under faster wind conditions (about from 11 to 14 m/s) and of strong wind (about from 14 to 17 m/s), the values of the electrical energy produced by the devices increase remarkably. In order to provide stability and strength to the devices for high wind speeds, e.g. during a storm or a hurricane, it is possible to provide a partial folding of the wing elements and a corresponding decrease of the aerodynamic forces acting thereon.

In case of application of the invention, and in particular of the embodiment illustrated with reference to Figures 7 and 8, for the conversion of water energy into electrical energy, assuming the river or channel to have a width of about 10 m and a minimum depth of about 0.3 m, for the wing device there may be selected an angle of attack with the following parameters:

- dimensions of the individual wing element equal to about (0.2x 2.5) m (area of about 0.5 m$^2$);
- number of wing elements per individual device equal to four;
- distance between the wing elements equal to about 0.4 m; and
- stroke of each device along the respective guide tension rod equal to about 6 m.

The power that can be generated by this system is disclosed in the following Table 3 depending on the water flow speed.

| TABLE 3 | | | | | | | | | |
|---|---|---|---|---|---|---|---|---|---|
| Water flow speed (m/s) | 1 | 2 | 3 | 4 | 5 | 6 | 7 | 8 | 10 |
| Generated power (kW) | 2 | 8 | 13.2 | 31.4 | 49 | 71 | 92 | 125 | 196 |

From this latter table it is apparent that the invention is effective also for low and moderate water flow speeds. Taking into account the fact that along the river there can be installed a chain of wing devices, the total value of the generated energy can be sufficiently high for local use. This type of device can be used on rivers with fish fauna as the device does not entrap such a fauna, nor the motion speed of the wing devices is too high for the latter.

Let us now consider another example in which the apparatus based on the mechanism of the angle of attack operates in water. The tide can generate very strong currents, reaching the 5-8 m/s at some sites. Let us consider the force that the current exerts onto the tilted wing element according to an angle of attack with respect thereto. In the following Table 4 the total pressure of the water current is disclosed.

| TABLE 4 | | | | | | | | | |
|---|---|---|---|---|---|---|---|---|---|
| Water speed (m/s) | 0,5 | 1 | 2 | 3 | 4 | 5 | 6 | 7 | 8 |
| pressure (kgf/m$^2$) | 12,75 | 51 | 204 | 459 | 816 | 1275 | 1836 | 2499 | 3264 |

Applying the formulas reported above, with a wing device with S = 5 m$^2$ and a system of four wing elements acting in parallel, will yield a total value of the driving force T reported in the following Table 5.

| TABLE 5 | | | | | | |
|---|---|---|---|---|---|---|
| Wind speed (m/s) | 1 | 2 | 3 | 4 | 5 | 6 | 7 |
| T, kgf | 1020 | 4080 | 9180 | 16320 | 25500 | 36720 | 49980 |

The value of T can be controlled by the angle of attack of the wing device. Assuming to keep a mean value of T= 10000 kgf and assuming the wing device to move in a direction perpendicular to the water current with a 0.5 m/s speed, a power value equal to 5000 kgf m/s or 49 kW is yielded. For a module having two wing devices moving in opposite directions, a rated output of 100 kW may be assumed. the 10-module system can produce 1 MW of power.

The present invention has been hereto described with reference to preferred embodiments thereof. It is understood that there may be other embodiments within the protective scope of the appended claims.

**Claims**

1. An apparatus (500; 504; 505; 200) for the conversion of wind or water flow energy into mechanical energy exploitable by users, comprising:

   - a pair of wing devices (501, 502; 86, 87; 205), each moving according to a respective operative path and each having an aerodynamic profile and being apt to assume a first driving configuration, in which the wing device is set in motion by the lift action of an incident air or hydro flow, and a second resting configuration;
   - configuration means (23, 24; 92, 93, 96, 97, 158, 161-164, 94, 95, 98, 100, 158; 221, 216, 222, 223) for varying the configuration of each of said wing devices, apt to cause the passing of each wing device from said first configuration to said second configuration, and vice versa, at predetermined positions of the wing device itself along its own operative path;
   - end-of-stroke means (29, 31; 113, 115; 226, 227) arranged at said predetermined positions apt to cooperate with said configuration means (23, 24; 92, 93, 96, 97, 158, 161-164, 94, 95, 98, 100, 158; 221, 216, 222, 223),

   the arrangement being such that each of said wing devices is apt to carry out, along its own operative path, alternatively a driving stroke, in which it is in said driving configuration and provides mechanical energy to the users, and a resting stroke, in which it is in said resting configuration to return into the initial position of said driving stroke, the arrangement being moreover such that when one wing device of said pair carries out its own driving stroke, the other one wing device of the pair carries out its resting stroke, and vice versa,
   **characterized in that** it further comprises

   - guiding means (7, 8; 81, 82; 203, 204) for guiding said wing devices and upon which said wing devices are slidable, which guiding means defines said operative path for each of said devices,

   and **in that** said end-of-stroke means comprises end-of-stroke elements (29, 31; 113, 115) arranged on said guiding means (7, 8; 81, 82; 203, 204).

2. The apparatus (500; 504; 505; 200) according to the preceding claim, comprising means (17, 18; 105, 106; 206) for connecting the wing devices (501, 502; 86, 87; 205) of said pair, apt to allow the dragging of the wing device which is in resting configuration by that which is in driving configuration.

3. The apparatus (500; 504; 505; 200) according to any one of the preceding claims, wherein said configuration means comprises portions (23, 24; 92, 93, 96, 97, 158, 161-164, 94, 95, 98, 100, 158; 221, 216, 222, 223) slidable along said operative path jointly with the corresponding wing device (501, 502; 86, 87; 205).

4. The apparatus (500; 504; 505; 200) according to any one of the preceding claims, comprising, for each wing device (501, 502; 86, 87; 205), a driving tension rod (17, 18; 105, 106; 206) connected to the wing device itself and apt to transmit mechanical energy to users during the driving stroke of the latter.

5. The apparatus (500; 504; 505; 200) according to any one of the preceding claims, comprising means for adjusting the length and/or the arrangement of the operative path of each wing device (501, 502; 86, 87; 205).

6. The apparatus (500; 504; 505; 200) according to the preceding claim, wherein said means for adjusting allow an adaptive variation of the operative path depending upon the energy provided to users.

7. The apparatus (500; 504) according to any one of the preceding claims, wherein at least one of said wing devices (501, 502) has a substantially sail-like flexible structure and wherein said means (23, 24) for varying the configuration are apt to modify the unfolding level of said wing device.

8. The apparatus (500; 504) according to the preceding claim, wherein said at least one wing device (501, 502) comprises at least one inflatable chamber (320).

9. The apparatus (500; 504) according to claim 7 or 8, wherein said at least one wing device (501, 502) comprises a plurality of wing elements (11, 13, 15, 12, 14, 16), which are arranged side-by-side and are rotatably connected the one to the other.

10. The apparatus (500; 504) according to any one of claims 7 to 9, wherein said configuration means (23, 24) associated with said at least one wing device (501, 502) with a substantially sail-like structure comprises a plurality of opening tension rods (19, 21, 20, 22) each connected to said wing device (501, 502) at one end thereof and traction means (53, 44) apt to exert a selective traction on said opening tension rods.

11. The apparatus (500; 504) according to claims 9 and 10, wherein said opening tension rods (19, 21, 20, 22) of said configuration means (23, 24) are connected to said wing device (501, 502) each at a respective pivotable connection between adjacent wing elements (11, 13, 15, 12, 14, 16).

12. The apparatus (500; 504) according to claim 10 or 11, wherein said traction means comprises, for each opening tension rod (19, 21, 20, 22), one pulley (53, 44) apt to receive said tension rod wound thereon and respective means (580, 46) for locking said pulley operable at said predetermined positions on said operative path.

13. The apparatus (505; 200) according to any one of the preceding claims, wherein at least one of said wing devices (860, 870; 205) comprises at least one wing element (86, 87; 215) having a substantially rigid structure and wherein said configuration means (92, 93, 96, 97, 158, 161-164, 94, 95, 98, 100, 158; 221, 216, 222, 223) is apt to modify the orientation of said wing element with respect to the direction of the incident flow.

14. The apparatus (505) according to the preceding claim, wherein said configuration means comprises a first mechanical circuit (92, 88, 96, 147-151) for controlling the position of a leading edge (862) of said at least one wing element (86, 87) and a second mechanical circuit (93, 89, 97, 152-155) for controlling the position of a trailing edge (863) of said at least one wing element.

15. The apparatus (505) according to claim 13 or 14, wherein said at least one wing device (860, 870) comprises a plurality of wing elements (86, 87) having a substantially rigid structure, said elements being arranged with respective transversal intermediate chord lines (861, 871) thereof parallel.

16. The apparatus (200) according to any one of claims 13 to 15, wherein said wing element or elements having a substantially rigid structure (215) are hinged on a chassis (217) of said at least one wing device (205).

17. The apparatus (200) according to any one of the preceding claims, comprising a plurality of operative modules each comprising a pair of wing devices (205).

18. The apparatus (500; 504; 505) for the conversion of wind flow energy according to any one of the preceding claims, comprising at least one aerostat (3, 4; 79) and wherein said guide means comprises at least one guide tension rod (7, 8; 81, 82) interposed between said aerostat and a ground platform and slidably coupled to said wing devices (501, 502; 860, 870).

19. The apparatus (200) for the conversion of water flow energy according to any one of claims 1 to 17, comprising a watercraft onto which there are installed said wing devices (205) of the pair, the construction being such that the latter arrange themselves, in use, below the surface of the water.

20. The apparatus (200) for the conversion of water flow energy according to the preceding claim, wherein said watercraft is of the catamaran type.

21. The apparatus (200) for the conversion of water flow energy according to claim 19, wherein said watercraft is of the submersible type.

22. The apparatus (200) for the conversion of water flow energy according to any one of the claims 19 to 21, wherein said guiding means comprises, for each wing device (205), a pair of parallel guide cross members (203, 204) arranged at the bottom of said watercraft.

23. A plant for the production of electrical energy, comprising an apparatus (500; 504; 505; 200) according to any one of the preceding claims and a system (503) for the conversion of the mechanical energy provided by said wing devices (501, 502; 86, 87; 205) into electrical energy.

24. The plant according to the preceding claim, comprising energy accumulating means (118) for ensuring continuity of energy output of the plant in any configuration of said wing devices (501, 502; 86, 87; 205) of said apparatus (500; 504; 505; 200).

25. A method for the conversion of wind or water flow energy into mechanical energy exploitable by users, comprising the steps of:

(i) providing a pair of wing devices (501, 502; 86, 87; 205), each moving according to respective operative path, each having an aerodynamic profile and being apt to assume a first driving configuration, in which the wing device is set in motion by the lift action of an incident air or water flow, and a second resting configuration;

(ii) modifying the configuration of each of said wing devices, so as to cause the passing of each wing device from said first configuration to said second configuration, and vice versa, at predetermined positions thereof along its operative path,

wherein end-of-stroke means (29, 31; 113, 115; 226, 227) are provided which are arranged at said predetermined positions and are apt to cooperate for said modification of configuration, and

wherein each of said wing devices is apt to carry out, along its own operative path, alternatively a driving stroke, in which it is in said driving configuration and provides mechanical energy to users, and a resting stroke, in which it is in said resting configuration to return into the initial position of said driving stroke, the arrangement being moreover such that when one wing device of said pair carries out its own driving stroke, the other one wing device of the pair carries out its own resting stroke, and vice versa,

**characterized in that** said wing devices are slidable along said respective operative paths along guiding means (7, 8; 81, 82; 203, 204) slidably coupled with said devices, which guiding means defines said operative path for each of said devices, and and **in that** said end-of-stroke means comprises end-of-stroke elements (29, 31; 113, 115) arranged on said guiding means (7, 8; 81, 82; 203, 204).

26. The method according to the preceding claim, wherein said step (ii) provides the dragging of the wing device that is in resting configuration by that in the driving configuration.

27. The method according to claim 25 or 26, wherein said step (iii) provides the generation of an electric control signal when a wing device reaches one of said predetermined positions, said signal being apt to initiate said configuration modifying.

28. The method according to any one of claims 25 to 27, comprising a step of adjusting the length and/or the arrangement of the operative path of each wing device (501, 502; 86, 87; 205).

29. The method according to the preceding claim, wherein said step of adjusting provides an adaptive variation of the operative path depending upon the energy provided to users.

30. The method according to the preceding claim, wherein said step of adjusting provides the measuring of a torque provided by a driving tension rod (17, 18; 105, 106; 206) associated with at least one of said wing devices (501, 502; 86, 87; 205).

31. The method for the conversion of water flow energy according to any one of claims 25 to 31, providing the installation of said wing devices (501, 502; 86, 87; 205) at a watercourse, so that said operative path develops in water in a direction substantially transversal to the watercourse itself.


**Patentansprüche**

1. Vorrichtung (500; 504; 505; 200) für die Umwandlung von Wind- oder Wasserströmungsenergie in mechanische Energie, die durch Nutzer nutzbar ist, mit:

- einem Paar Flügelvorrichtungen (501, 502; 86, 87; 205), die sich jeweils auf einem zugeordneten Arbeitsweg bewegen und jeweils ein aerodynamisches Profil haben und in der Lage sind, eine erste, Antriebskonfiguration einzunehmen, in welcher die Flügelvorrichtung durch die Hubwirkung einer einfallenden Luft- oder Wasserströmung in Bewegung gesetzt wird, und eine zweite, Ruhekonfiguration;

- Konfigurationseinrichtungen (23, 24; 92, 93, 96, 97, 158, 161-164, 94, 95, 98, 100, 158; 221, 216, 222, 223) zum Verändern der Konfiguration von jeder der Flügelvorrichtungen, die in der Lage sind zu bewirken, dass jede Flügelvorrichtung aus der ersten Konfiguration in die zweite Konfiguration übergeht, und umgekehrt, in vorbestimmten Positionen der Flügelvorrichtung selbst längs ihres eigenen Arbeitsweges;

- Hubendeeinrichtungen (29, 31; 113, 115; 226, 227), die in den vorbestimmten Positionen angeordnet sind und in der Lage sind, mit den Konfigurationseinrichtungen (23, 24; 92, 93, 96, 97, 158, 161-164, 94, 95, 98, 100, 158; 221, 216, 222, 223) zusammenzuwirken,

wobei die Anordnung so getroffen ist, dass jede der Flügelvorrichtungen in der Lage ist, auf ihrem eigenen Arbeitsweg abwechselnd einen Antriebshub auszuführen, in welchem sie in der Antriebskonfiguration ist und den Nutzern mechanische Energie liefert, und einen Ruhehub, in welchem sie in der Ruhekonfiguration ist, um in die Ausgangsposition des Antriebshubes zurückzukehren, wobei die Anordnung darüber hinaus so getroffen ist, dass, wenn eine Flügelvorrichtung des Paares ihren eigenen Antriebshub ausführt, die andere Flügelvorrichtung des Paares ihren Ruhehub ausführt, und umgekehrt,

**dadurch gekennzeichnet, dass** sie weiter aufweist

- eine Führungseinrichtung (7, 8; 81, 82; 203, 204) zum Führen der Flügelvorrichtungen und auf der die Flügelvorrichtungen verschiebbar sind, wobei die Führungseinrichtung den Arbeitsweg für jede der Vorrichtungen festlegt, und dass die Hubendeeinrichtung Hubendeelemente (29, 31; 113, 115) aufweist, die auf der Führungseinrichtung (7, 8; 81, 82; 203, 204) angeordnet sind.

2. Vorrichtung (500; 504; 505; 200) nach dem vorhergehenden Anspruch, mit einer Einrichtung (17, 18, 105, 106; 206) zum Verbinden der Flügelvorrichtungen (501, 502; 86, 87; 205) des Paares, die in der Lage ist, die Flügelvorrichtung, die in der Ruhekonfiguration ist, durch diejenige zu ziehen, die in der Antriebskonfiguration ist.

3. Vorrichtung (500; 504; 505; 200) nach einem der vorhergehenden Ansprüche, wobei die Konfigurationseinrichtung Teile (23, 24; 92, 93, 96, 97, 158, 161-164, 94, 95, 98, 100, 158; 221, 216, 222, 223) aufweist, die längs des Arbeitsweges gemeinsam mit der entsprechenden Flügelvorrichtung (501, 502; 86, 87; 205) verschiebbar sind.

4. Vorrichtung (500; 504; 505; 200) nach einem der vorhergehenden Ansprüche, die für jede Flügelvorrichtung (501, 502; 86, 87; 205) ein Antriebszugglied (17, 18; 105, 106; 206) aufweist, das mit der Flügelvorrichtung selbst verbunden und in der Lage ist, mechanische Energie während des Antriebshubes derselben zu den Nutzern zu übertragen.

5. Vorrichtung (500; 504; 505; 200) nach einem der vorhergehenden Ansprüche, mit Einrichtungen zum Einstellen der Länge und/oder der Anordnung des Arbeitsweges von jeder Flügelvorrichtung (501, 502; 86, 87; 205).

6. Vorrichtung (500; 504; 505; 200) nach dem vorhergehenden Anspruch, wobei die Einrichtungen zum Einstellen eine adaptive Variation des Arbeitsweges in Abhängigkeit von der den Nutzern gelieferten Energie erlauben.

7. Vorrichtung (500; 504) nach einem der vorhergehenden Ansprüche, wobei wenigstens eine der Flügelvorrichtungen (501, 502) einen im Wesentlichen segelartigen, flexiblen Aufbau hat und wobei die Einrichtungen (23, 24) zum Verändern der Konfiguration in der Lage sind, den Entfaltungsgrad der Flügelvorrichtung zu modifizieren.

8. Vorrichtung (500; 504) nach dem vorhergehenden Anspruch, wobei die wenigstens eine Flügelvorrichtung (501, 502) wenigstens eine aufpumpbare Kammer (320) aufweist.

9. Vorrichtung (500; 504) nach Anspruch 7 oder 8, wobei die wenigstens eine Flügelvorrichtung (501, 502) mehrere Flügelelemente (11, 13, 15, 12, 14, 16) aufweist, die nebeneinander angeordnet und drehbar mit einander verbunden sind.

10. Vorrichtung (500; 504) nach einem der Ansprüche 7 bis 9, wobei die Konfigurationseinrichtung (23, 24), die der wenigstens einen Flügelvorrichtung (501, 502) mit einem im Wesentlichen segelartigen Aufbau zugeordnet ist, mehrere Öffnungszugglieder (19, 21, 20, 22) aufweist, von denen jedes mit der Flügelvorrichtung (501, 502) an einem Ende derselben verbunden ist, und Traktionseinrichtungen (53, 44), die in der Lage sind, eine selektive Traktion auf die Öffnungszugglieder auszuüben.

11. Vorrichtung (500; 504) nach den Ansprüchen 9 und 10, wobei die Öffnungszugglieder (19, 21, 20, 22) der Konfigurationseinrichtungen (23, 24) mit der Flügelvorrichtung (501, 502) jeweils an einer Drehverbindung zwischen benachbarten Flügelelementen (11, 13, 15, 12, 14, 16) verbunden sind.

12. Vorrichtung (500; 504) nach Anspruch 10 oder 11, wobei die Traktionseinrichtung für jedes Öffnungszugglied (19, 21, 20, 22) eine Rolle (53, 44) aufweist, die in der Lage ist, das Zugglied aufzunehmen, das auf sie gewickelt ist, und eine Einrichtung (580, 46) zum Verriegeln der Rolle, die in den vorbestimmten Positionen auf dem Arbeitsweg betätigbar ist.

13. Vorrichtung (505; 200) nach einem der vorhergehenden Ansprüche, wobei wenigstens eine der Flügelvorrichtungen (860, 870; 205) wenigstens ein Flügelelement (86, 87; 215) aufweist, das einen im Wesentlichen starren Aufbau hat, und wobei die Konfigurationseinrichtung (92, 93, 96, 97, 158, 161-164, 94, 95, 98, 100, 158; 221, 216, 222, 223) in der Lage ist, die Orientierung des Flügelelements in Bezug auf die Richtung der einfallenden Strömung zu modifizieren.

14. Vorrichtung (505) nach dem vorhergehenden Anspruch, wobei die Konfigurationseinrichtung einen ersten mechanischen Kreis (92, 88, 96, 147-151) zum Steuern der Position einer Vorderkante (862) des wenigstens einen Flügelelements (86, 87) und einen zweiten mechanischen Kreis (93, 89, 97, 152-155) zum Steuern der Position einer Hinterkante (863) des wenigstens einen Flügelelements aufweist.

15. Vorrichtung (505) nach Anspruch 13 oder 14, wobei die wenigstens eine Flügelvorrichtung (860, 870) mehrere Flügelelemente (86, 87) aufweist, die einen im Wesentlichen starren Aufbau haben, wobei die Elemente mit Transversalzwischensehnenlinien (861, 871) derselben parallel angeordnet sind.

16. Vorrichtung (200) nach einem der Ansprüche 13 bis 15, wobei das Flügelelement oder die Flügelelemente, die einen im Wesentlichen starren Aufbau (215) haben, an einem Chassis (217) der wenigstens einen Flügelvorrichtung (205) angelenkt sind.

17. Vorrichtung (200) nach einem der vorhergehenden Ansprüche, mit mehreren Arbeitsmodulen, die jeweils ein Paar Flügelvorrichtungen (205) aufweisen.

18. Vorrichtung (500; 504; 505) zur Umwandlung von Windströmungsenergie nach einem der vorhergehenden Ansprüche, mit wenigstens einem Aerostat (3, 4; 79), wobei die Führungseinrichtung wenigstens ein Führungszugglied (7, 8; 81, 82) aufweist, das zwischen dem Aerostat und einer Bodenplattform angeordnet und mit den Flügelvorrichtungen (501, 502; 860, 870) verschiebbar gekoppelt ist.

19. Vorrichtung (200) für die Umwandlung von Wasserströmungsenergie nach einem der Ansprüche 1 bis 17, mit einem Wasserfahrzeug, auf welchem die Flügelvorrichtungen (205) des Paares installiert sind, wobei der Aufbau so ist, dass sich letztere im Gebrauch unter der Wasseroberfläche selbst anordnen.

20. Vorrichtung (200) für die Umwandlung von Wasserströmungsenergie nach dem vorhergehenden Anspruch, wobei das Wasserfahrzeug ein Katamaran-Fahrzeug ist.

21. Vorrichtung (200) für die Umwandlung von Wasserströmungsenergie nach Anspruch 19, wobei das Wasserfahrzeug ein Unterwasserfahrzeug ist.

22. Vorrichtung (200) für die Umwandlung von Wasserströmungsenergie nach einem der Ansprüche 19 bis 21, wobei die Führungseinrichtung für jede Flügelvorrichtung (205) ein Paar parallele Führungsquerteile (203, 204) aufweist, die am Boden des Wasserfahrzeuges angeordnet sind.

23. Anlage für die Erzeugung von elektrischer Energie, mit einer Vorrichtung (500; 504; 505; 200) nach einem der vorhergehenden Ansprüche und einem System (503) für die Umwandlung der durch die Flügelvorrichtungen (501, 502; 86, 87; 205) gelieferten elektrischen Energie in mechanische Energie.

24. Anlage nach dem vorhergehenden Anspruch, mit einer Energiesammeleinrichtung (118) zum Gewährleisten von Kontinuität der Energieabgabe der Anlage in jeder Konfiguration der Flügelvorrichtungen (501, 502; 86, 87; 205) der Vorrichtung (500; 504; 505; 200).

25. Verfahren für die Umwandlung von Wind- oder Wasserströmungsenergie in mechanische Energie, die durch Nutzer nutzbar ist, beinhaltend die Schritte:

   (i) Bereitstellen von einem Paar Flügelvorrichtungen (501, 502; 86, 87; 205), die sich jeweils auf einem zugeordneten Arbeitsweg bewegen, jeweils ein aerodynamisches Profil haben und in der Lage sind, eine erste, Antriebskonfiguration einzunehmen, in welcher die Flügelvorrichtung durch die Hubwirkung einer einfallenden Luft- oder Wasserströmung in Bewegung gesetzt wird, und eine zweite, Ruhekonfiguration;

(ii) Modifizieren der Konfiguration von jeder der Flügelvorrichtungen, um so zu bewirken, dass jede Flügelvorrichtung aus der ersten Konfiguration in die zweite Konfiguration übergeht, und umgekehrt, in vorbestimmten Positionen derselben längs ihres Arbeitsweges,

wobei Hubendeeinrichtungen (29, 31; 113, 115; 226, 227) vorgesehen sind, die in den vorbestimmten Positionen angeordnet sind und in der Lage sind, für die Modifikation der Konfiguration zusammenzuwirken, und wobei jede der Flügelvorrichtungen in der Lage ist, längs ihres eigenen Arbeitsweges abwechselnd einen Arbeitshub auszuführen, in welchem sie in der Antriebskonfiguration ist und Nutzern mechanische Energie liefert, und einen Ruhehub, in welchem sie in der Ruhekonfiguration ist, um in die Ausgangsposition des Antriebshubes zurückzukehren, wobei die Anordnung darüber hinaus so getroffen ist, dass, wenn eine Flügelvorrichtung des Paares ihren eigenen Antriebshub ausführt, die andere Flügelvorrichtung des Paares ihren eigenen Ruhehub ausführt, und umgekehrt,

**dadurch gekennzeichnet, dass** die Flügelvorrichtungen längs der Arbeitswege längs einer Führungseinrichtung (7, 8; 81, 82; 203, 204) verschiebbar sind, die mit den Vorrichtungen verschiebbar gekoppelt ist, wobei die Führungseinrichtung den Arbeitsweg für jede der Vorrichtungen festlegt, und

dass die Hubendeeinrichtung Hubendeelemente (29, 31; 113, 115) aufweist, die auf der Führungseinrichtung (7, 8; 81, 82; 203, 204) angeordnet sind.

26. Verfahren nach dem vorhergehenden Anspruch, wobei der Schritt (ii) bewirkt, dass die Flügelvorrichtung, die in der Ruhekonfiguration ist, durch diejenige, die in der Antriebskonfiguration ist, gezogen wird.

27. Verfahren nach Anspruch 25 oder 26, wobei der Schritt (iii) bewirkt, dass ein elektrisches Steuersignal erzeugt wird, wenn eine Flügelvorrichtung eine der vorbestimmten Positionen erreicht, wobei das Signal in der Lage ist, das Modifizieren der Konfiguration einzuleiten.

28. Verfahren nach einem der Ansprüche 25 bis 27, beinhaltend einen Schritt des Einstellens der Länge und/oder der Anordnung des Arbeitsweges von jeder Flügelvorrichtung (501, 502; 86, 87; 205).

29. Verfahren nach dem vorhergehenden Anspruch, wobei der Schritt des Einstellens eine adaptive Variation des Arbeitsweges in Abhängigkeit von der den Nutzern gelieferten Energie bewirkt.

30. Verfahren nach dem vorhergehenden Anspruch, wobei der Schritt des Einstellens das Messen eines Drehmoments bewirkt, das durch ein Antriebszugglied (17, 18; 105, 106; 206) geliefert wird, welches wenigstens einer der Flügelvorrichtungen (501, 502; 86, 87; 205) zugeordnet ist.

31. Verfahren für die Umwandlung von Wasserströmungsenergie nach einem der Ansprüche 25 bis 30, welches die Installation der Flügelvorrichtungen (501, 502; 86, 87; 205) in einem Wasserlauf beinhaltet, so dass sich der Arbeitsweg im Wasser in einer Richtung ausbildet, die zu dem Wasserlauf selbst im Wesentlichen transversal ist.

**Revendications**

1. Appareil (500 ; 504 ; 505 ; 200) pour la conversion d'une énergie d'écoulement de vent ou d'eau en une énergie mécanique exploitable par des utilisateurs, comportant :

- une paire de dispositifs formant aile (501, 502 ; 86, 87 ; 205), chacun se déplaçant selon un trajet opérationnel respectif et chacun ayant un profil aérodynamique et étant à apte à prendre une première configuration d'entraînement, dans laquelle le dispositif formant aile est établi en mouvement par l'action de levage d'un écoulement d'air ou hydraulique incident, et une seconde configuration de repos,

- des moyens de configuration (23, 24 ; 92, 93, 96, 97, 158, 161 à 164, 94, 95, 98, 100, 158 ; 221, 216, 222, 223) pour modifier la configuration de chacun desdits dispositifs formant aile, aptes à provoquer le passage de chacun desdits dispositifs formant aile depuis ladite première configuration vers ladite seconde configuration, et vice versa, dans des positions prédéterminées du dispositif formant aile lui-même le long de son propre trajet opérationnel,

- des moyens de fin de course (29, 31 ; 113, 115 ; 226, 227) agencés dans lesdites positions prédéterminées, aptes à coopérer avec lesdits moyens de configuration (23, 24 ; 92, 93, 96, 97, 158, 161 à 164, 94, 95, 98, 100, 158 ; 221, 216, 222, 223),

l'agencement étant de telle sorte que chacun desdits dispositifs formant aile est apte à effectuer, le long de son propre trajet opérationnel, en alternance une course d'entraînement, dans laquelle il est dans ladite configuration d'entraînement et fournit une énergie mécanique aux utilisateurs, et une course de repos, dans laquelle il est dans ladite configuration de repos pour retourner dans la position initiale de ladite course d'entraînement, l'agencement étant de plus tel que lorsqu'un premier dispositif formant aile de ladite paire effectue sa propre course d'entraînement, l'autre dispositif formant aile de la paire effectue sa course de repos, et vice versa,
**caractérisé en ce qu'**il comporte en outre

- des moyens de guidage (7, 8 ; 81, 82 ; 203, 204) pour guider lesdits dispositifs formant aile, et sur lesquels lesdits dispositifs formant aile peuvent coulisser, lesquels moyens de guidage définissent ledit trajet opérationnel pour chacun desdits dispositifs,

et **en ce que** lesdits moyens de fin de course comportent des éléments de fin de course (29, 31 ; 113, 115) agencés sur lesdits moyens de guidage (7, 8 ; 81, 82 ; 203, 204).

2. Appareil (500 ; 504 ; 505 ; 200) selon la revendication précédente, comportant des moyens (17, 18 ; 105, 106 ; 206) pour connecter les dispositifs formant aile (501, 502 ; 86, 87 ; 205) de ladite paire, aptes à autoriser le traitement du dispositif formant aile qui est dans la configuration de repos par celui qui est dans la configuration d'entraînement.

3. Appareil (500 ; 504 ; 505 ; 200) selon l'une quelconque des revendications précédentes, dans lequel lesdits moyens de configuration comportent des parties (23, 24 ; 92, 93, 96, 97, 158, 161 à 164, 94, 95, 98, 100, 158 ; 221, 216, 222, 263) pouvant coulisser le long dudit trajet opérationnel conjointement au dispositif formant aile correspondant (501, 502 ; 86, 87 ; 205).

4. Appareil (500 ; 504 ; 505 ; 200) selon l'une quelconque des revendications précédentes, comportant, pour chaque dispositif formant aile (501, 502 ; 86, 87 ; 205), une tige de tension d'entraînement (17, 18 ; 105, 106 ; 206) reliée au dispositif d'entraînement lui-même, et apte à transmettre une énergie mécanique à des utilisateurs pendant la course d'entraînement de ce dernier.

5. Appareil (500 ; 504 ; 505 ; 200) selon l'une quelconque des revendications précédentes, comportant des moyens pour ajuster la longueur et/ou l'agencement du trajet opérationnel de chaque dispositif formant aile (501, 502 ; 86, 87 ; 205).

6. Appareil (500 ; 504 ; 505 ; 200) selon la revendication précédente, dans lequel lesdits moyens d'ajustement permettent une modification adaptative du trajet opérationnel selon l'énergie fournie aux utilisateurs.

7. Appareil (500 ; 504) selon l'une quelconque des revendications précédentes, dans lequel au moins un desdits dispositifs formant aile (501, 502) a une structure souple sensiblement analogue à une voile, et dans lequel lesdits moyens (24, 25) pour modifier la configuration sont aptes à modifier le niveau de dépliage dudit dispositif formant aile.

8. Appareil (500 ; 504) selon la revendication précédente, dans lequel ledit au moins un dispositif formant aile (501, 502) comporte au moins une chambre gonflable (320).

9. Appareil (500 ; 504) selon la revendication 7 ou 8, dans lequel ledit au moins un dispositif formant aile (501, 502) comporte une pluralité d'éléments formant aile (11, 13, 15, 12, 14, 16), qui sont agencés côte à côte et connectés de manière rotative les uns aux autres.

10. Appareil (500 ; 504) selon l'une quelconque des revendications 7 à 9, dans lequel lesdits moyens de configuration (23, 24) associés audit au moins un dispositif formant aile (501, 502) avec une structure sensiblement analogue à une voile comportent une pluralité de tiges de tension d'ouverture (19, 21, 20, 22), chacune connectée audit dispositif formant aile (501, 502) à une extrémité de celle-ci, et des moyens de traction (53, 44) aptes à exercer une traction sélective sur lesdites tiges de tension d'ouverture.

11. Appareil (500 ; 504) selon les revendications 9 et 10, dans lequel lesdites tiges de tension d'ouverture (19, 21, 20, 22) desdits moyens de configuration (23, 24) sont connectées audit dispositif formant aile (501, 502) chacune à une connexion pivotante respective entre des éléments formant aile adjacents (11, 13, 15, 12, 14, 16).

12. Appareil (500 ; 504) selon la revendication 10 ou 11, dans lequel lesdits moyens de traction comportent, pour chaque tige de tension d'ouverture (19, 21, 20, 22), une poulie (53, 44) apte à recevoir ladite tige de tension enroulée sur celle-ci, et des moyens respectifs (580, 46) pour verrouiller ladite poulie opérationnelle dans lesdites positions prédéterminées sur ledit trajet opérationnel.

**13.** Appareil (505 ; 200) selon l'une quelconque des revendications précédentes, dans lequel au moins un desdits dispositifs formant aile (860, 870 ; 205) comporte au moins un élément d'aile (86, 87 ; 215) ayant une structure sensiblement rigide, et dans lequel lesdits moyens de configuration (92, 93, 96, 97, 158, 161 à 164, 94, 95, 98, 100, 158 ; 221, 216, 222, 223) sont aptes à modifier l'orientation dudit élément formant aile par rapport à la direction de l'écoulement incident.

**14.** Appareil (505) selon la revendication précédente, dans lequel lesdits moyens de configuration comportent un premier circuit mécanique (92, 88, 96, 147 à 151) pour commander la position d'un bord d'attaque (862) dudit au moins un élément d'aile (86, 87), et un second circuit mécanique (93, 89, 97, 152 à 155) pour commander la position d'un bord de queue (863) dudit au moins un élément d'aile.

**15.** Appareil (505) selon la revendication 13 ou 14, dans lequel ledit au moins un dispositif formant aile (860, 870) comporte une pluralité d'éléments d'aile (86, 87) ayant une structure sensiblement rigide, lesdits éléments étant agencés avec des lignes de corde intermédiaires transversales respectives (861, 871) de ceux-ci parallèles.

**16.** Appareil (200) selon l'une quelconque des revendications 13 à 15, dans lequel ledit ou lesdits éléments d'aile ayant une structure sensiblement rigide (215) sont articulés sur un châssis (217) dudit au moins un dispositif formant aile (205).

**17.** Appareil (200) selon l'une quelconque des revendications précédentes, comportant une pluralité de modules opérationnels comportant chacun une paire de dispositifs formant aile (205).

**18.** Appareil (500 ; 504 ; 505) pour la conversion d'une énergie d'écoulement de vent selon l'une quelconque des revendications précédentes, comportant au moins un aérostat (3, 4 ; 79), et dans lequel lesdits moyens de guidage comportent au moins une tige de tension de guidage (7, 8 ; 81, 82) interposée entre ledit aérostat et une plate-forme de terre, et couplée de manière coulissante audit dispositif formant aile (501, 502 ; 860, 870).

**19.** Appareil (200) pour la conversion d'une énergie d'écoulement d'eau selon l'une quelconque des revendications 1 à 17, comportant un navire sur lequel sont installés lesdits dispositifs formant aile (205) de la paire, la construction étant telle que ces derniers s'agencent eux-mêmes, en utilisation, sous la surface de l'eau.

**20.** Appareil (200) pour la conversion d'énergie d'écoulement d'eau selon la revendication précédente, dans lequel ledit navire est du type catamaran.

**21.** Appareil (200) pour la conversion d'énergie d'écoulement d'eau selon la revendication 19, dans lequel ledit navire est du type submersible.

**22.** Appareil (200) pour la conversion d'énergie d'écoulement d'eau selon l'une quelconque des revendications 19 à 21, dans lequel lesdits moyens de guidage comportent, pour chaque dispositif formant aile (205), une paire d'éléments de guidage transversaux parallèles (203, 204) agencés à la partie inférieure dudit navire.

**23.** Installation pour la production d'énergie électrique, comportant un appareil (500 ; 504 ; 505 ; 200) selon l'une quelconque des revendications précédentes, et un système (503) pour la conversion de l'énergie mécanique fournie par lesdits dispositifs formant aile (501, 502 ; 86, 87 ; 205) en énergie électrique.

**24.** Installation selon l'une quelconque des revendications précédentes, comportant des moyens d'accumulation d'énergie (118) pour garantir une continuité de sortie d'énergie de l'installation dans une configuration quelconque desdits dispositifs formant aile (501, 502 ; 86, 87 ; 205) dudit appareil (500 ; 504 ; 505 ; 200).

**25.** Procédé pour la conversion d'énergie d'écoulement de vent et/ou d'eau en énergie mécanique exploitable par des utilisateurs, comportant les étapes consistant :

(i) fournir une paire de dispositifs formant aile (501, 502 ; 86, 87 ; 205), chacun se déplaçant selon un trajet opérationnel respectif, chacun ayant un profil aérodynamique et étant apte à prendre une première configuration d'entraînement, dans laquelle le dispositif formant aile est établi en mouvement par l'action de levage d'un écoulement d'air ou d'eau incident, et une seconde configuration de repos,

(ii) modifier la configuration de chacun desdits dispositifs formant aile, de manière à provoquer le passage de chaque dispositif formant aile depuis ladite première configuration vers ladite seconde configuration, et vice versa, dans des positions prédéterminées de ceux-ci le long de leur trajet opérationnel,

dans lequel des moyens de fin de course (29, 31 ; 113, 115 ; 226, 227) sont fournis, qui sont agencés dans lesdites positions prédéterminées, et qui sont aptes à coopérer pour ladite modification de configuration, et

dans lequel chacun desdits dispositifs formant aile est apte à effectuer, le long de son propre trajet opérationnel, en alternance une course d'entraînement, dans laquelle il est dans ladite configuration d'entraînement et fournit une énergie mécanique à des utilisateurs, et une course de repos, dans laquelle il est dans ladite configuration de repos pour retourner dans ladite position initiale de ladite course d'entraînement, l'agencement étant de plus tel que lorsqu'un premier dispositif formant aile de ladite paire effectue sa propre course d'entraînement, l'autre dispositif formant aile de la paire effectue sa propre course de repos, et vice versa,

**caractérisé en ce que** lesdits dispositifs formant aile peuvent coulisser le long desdits trajets opérationnels respectifs le long de moyens de guidage (7, 8 ; 81, 82 ; 203, 204) couplés de manière coulissante auxdits dispositifs, lesquels moyens de guidage définissent ledit trajet opérationnel pour chacun desdits dispositifs, et

**en ce que** lesdits moyens de fin de course comportent des éléments de fin de course (29, 31 ; 113, 115) agencés sur lesdits moyens de guidage (7, 8 ; 81, 82 ; 203, 204).

26. Procédé selon la revendication précédente, dans lequel ladite étape (ii) prévoit le traitement du dispositif formant aile qui est dans la configuration de repos par celui dans la configuration d'entraînement.

27. Procédé selon la revendication 25 ou 26, dans lequel ladite étape (iii) prévoit la génération d'un signal de commande électrique lorsqu'un dispositif formant aile atteint une desdites positions prédéterminées, ledit signal étant apte à initier ladite modification de configuration.

28. Procédé selon l'une quelconque des revendications 25 à 27, comportant une étape consistant à ajuster la longueur et/ou l'agencement du trajet opérationnel de chaque dispositif formant aile (501, 502 ; 86, 87 ; 205).

29. Procédé selon la revendication précédente, dans lequel ladite étape d'ajustement prévoit une modification adaptative du trajet opérationnel selon l'énergie fournie aux utilisateurs.

30. Procédé selon la revendication précédente, dans lequel ladite étape d'ajustement prévoit la mesure d'un couple fourni par une tige de tension d'entraînement (17, 18 ; 105, 106 ; 206) associée à au moins un desdits dispositifs formant aile (501, 502 ; 86, 87 ; 205).

31. Procédé pour la conversion d'énergie d'écoulement d'eau selon l'une quelconque des revendications 25 à 31, prévoyant l'installation dudit dispositif formant aile (501, 502 ; 86, 87 ; 205) au niveau d'un cours d'eau, de sorte que ledit trajet opérationnel se développe dans l'eau dans une direction sensiblement transversale au cours d'eau lui-même.

FIG.1

FIG.2A

FIG.2B

FIG.3

FIG.4

FIG.5

FIG.6

FIG.7

**FIG.8**

**FIG.8A**

fig.9

fig.10

EP 1 581 743 B1

fig.12

fig.11